# FASCICULE DE BREVET EUROPEEN

(11) **EP 4 447 302 B1**
(45) Date de publication et mention de la délivrance du brevet: **07.10.2026**
(21) Numéro de dépôt: 24169708.5
(22) Date de dépôt: 11.04.2024
(51) Int. Cl.: H02M 3/00, H02M 3/22, H02M 3/28, H02M 1/00, H02M 1/42, H02M 3/335

(54) **COMMANDE DE CONVERTISSEUR À DECOUPAGE À DOUBLE PONTS**
DOPPELBRÜCKEN-SCHALTWANDLERSTEUERUNG
CONTROL OF DUAL BRIDGE SWITCHED MODE CONVERTER

(30) Priorité: 11.04.2023 FR 2303570
(43) Date de publication de la demande: 16.10.2024
(73) Titulaire: Commissariat à l'Energie Atomique et aux Energies Alternatives, 75015 Paris (FR); Renault SAS, 92100 Boulogne Billancourt (FR)
(72) Inventeur: LEIRENS, Sylvain, 38054 GRENOBLE CEDEX 09 (FR); MAYNARD, Xavier, 38054 GRENOBLE CEDEX 09 (FR); LOUDOT, Serge, 91190 VILLIERS LE BACLE (FR)
(74) Mandataire: Cabinet Beaumont

(56) Documents cités:
- US-A1- 2021 359 609

## Description

### Domaine technique

La présente description concerne de façon générale les dispositifs électroniques, en particulier les convertisseurs à découpage.

### Technique antérieure

Les convertisseurs à découpage utilisent un ou des interrupteurs mis alternativement aux états passant et bloqué à une fréquence de découpage. On utilise des convertisseurs à découpage pour fournir une tension et/ou un courant à partir d'une alimentation ayant des valeurs de tension/courant différentes des valeurs des tension/courant à fournir. Par exemple, un convertisseur à découpage de type alternatif-continu AC-DC (en anglais "Alternating current-Direct current") permet d'obtenir une tension continue à partir d'une source d'une tension alternative telle que celle d'un réseau électrique ou d'un alternateur.

Le brevet US2021359609A1 divulgue un procédé de commande d'un convertisseur comprenant deux ponts en H couplés par un transformateur, dans lequel : deux séquences de commutation entre des états sont respectivement appliquées aux deux ponts ; l'un des états d'une première des séquences correspond à un sens donné d'application d'une tension au transformateur par le pont auquel est appliquée ladite première séquence ; la première des séquences varie au cours d'une même demi-onde d'une tension alternative aux bornes de l'un des ponts, de sorte que : pendant au moins une première période, les commutations vers et depuis ledit état se produisent dans un même état d'une deuxième des séquences ; et pendant au moins une deuxième période, les commutations vers et depuis ledit état se produisent dans des états différents de la deuxième des séquences.

### Résumé de l'invention

Il existe un besoin de pallier tout ou partie des inconvénients des convertisseurs à découpage connus, et, en particulier, des convertisseurs à découpage à double ponts actifs (convertisseurs DAB de l'anglais "Dual Active Bridge Converter").

Par exemple, il existe un besoin d'un procédé de commande d'un convertisseur à découpage, par exemple à double ponts actifs, permettant de conserver des commutations en zéro de tension (ZVS de l'anglais "Zero Voltage Switching"), par exemple quand le convertisseur commute entre deux modes de commande.

Un mode de réalisation pallie tout ou partie des inconvénients des convertisseurs à découpage connus, et, en particulier, des convertisseurs à découpage à double ponts actifs (convertisseurs DAB de l'anglais "Dual Active Bridge Converter").

Par exemple, un mode de réalisation prévoit un procédé de commande d'un convertisseur à découpage, par exemple à double ponts actifs, permettant de conserver des commutations en zéro de tension (ZVS), par exemple quand le convertisseur commute entre deux modes de commande.

Un mode de réalisation prévoit un procédé de commande d'un convertisseur comprenant deux ponts en H reliés par un transformateur, dans lequel :
- des répétitions, à une fréquence de répétition, de deux séquences de commutations entre plusieurs états sont appliquées respectivement aux deux ponts ;
- l'un des états d'une première des deux séquences correspond à un sens donné d'application d'une tension au transformateur par le pont auquel la première des deux séquences est appliquée ;
- dans un premier mode de commande, des commutations d'entrée et sortie dudit l'un des états de la première des deux séquences se produisent à des états différents de la deuxième des deux séquences ;
- dans un deuxième mode de commande, des commutations d'entrée et sortie dudit l'un des états de la première des deux séquences se produisent à un même état d'une deuxième des deux séquences ; et
- chaque transition entre le premier mode à une valeur nominale de fréquence de répétition et le deuxième mode à la valeur nominale de la fréquence de répétition comprend une adaptation de la fréquence de répétition déterminée par une première durée égale à une durée de temps mort de commutation ou au produit de la durée de temps mort de commutation et d'une marge de commutation en tension nulle.

Selon un mode de réalisation, chaque transition comprend, sur la base d'un modèle du convertisseur :
- le calcul d'une première puissance transférable entre les deux ponts avec le premier mode et la valeur nominale de la fréquence de répétition, la première puissance étant déterminée par la première durée ;
- le calcul d'une deuxième puissance transférable entre les deux ponts avec le deuxième mode et la valeur nominale de la fréquence de répétition, la deuxième puissance étant déterminée par la première durée ;
- le calcul d'une troisième puissance transférable entre les deux ponts dans les premier et deuxième modes à la valeur nominale de la fréquence de répétition et sans prendre en compte la première durée ;
- le calcul d'une première valeur de la fréquence de répétition dans le premier mode, la première valeur de la fréquence de répétition étant déterminée par la troisième puissance transférable et la première durée ; et
- le calcul d'une deuxième valeur de la fréquence de répétition dans le deuxième mode, la deuxième valeur de la fréquence de répétition étant déterminée par la troisième puissance transférable et la première durée.

Selon un mode de réalisation :
chaque transition du premier mode au deuxième mode comprend un saut de la première valeur à la deuxième valeur de la fréquence de répétition ; et
chaque transition du deuxième mode au premier mode comprend un saut de la deuxième valeur à la première valeur de la fréquence de répétition.

Selon un mode de réalisation :
chaque transition du premier mode avec la valeur nominale de la fréquence de répétition au deuxième mode avec la valeur nominale de la fréquence de répétition comprend successivement :
   - dans le premier mode, passer de la première puissance à la troisième puissance en passant de la valeur nominale de la fréquence de répétition à la première valeur de la fréquence de répétition,
   - à la troisième puissance, commuter du premier mode au deuxième mode en commutant de la première valeur de la fréquence de répétition à la deuxième valeur de fréquence de répétition, et
   - dans le deuxième mode, passer de la troisième puissance à la deuxième puissance en passant de la deuxième valeur de la fréquence de répétition à la valeur nominale de la fréquence de répétition ; et
chaque transition du deuxième mode avec la valeur nominale de la fréquence de répétition au premier mode avec la valeur nominale de la fréquence de répétition comprend successivement :
   - dans le deuxième mode, passer de la deuxième puissance à la troisième puissance en passant de la valeur nominale de la fréquence de répétition à la deuxième valeur de la fréquence de répétition,
   - à la troisième puissance, commuter du deuxième mode au premier mode en commutant de la deuxième valeur de la fréquence de répétition à la première valeur de la fréquence de répétition, et
   - dans le premier mode, passer de la troisième puissance à la première puissance en passant de la première valeur de la fréquence de répétition à la valeur nominale de la fréquence de répétition.

Selon un mode de réalisation :
les deux séquences comprennent chacune deux cycles de commutations respectifs de deux branches du pont auquel la séquence est appliquée ; et
les commutations des séquences ont lieu à des instants résultant de calculs basés sur une égalité entre :
   - une puissance de consigne à transférer entre les ponts par le convertisseur ; et
   - une puissance transférable calculée à partir du modèle du convertisseur et à partir de valeurs des tensions aux bornes des ponts.

Selon un mode de réalisation, la consigne est calculée en fonction d'une valeur de tension reçue par l'un des ponts et/ou d'une valeur de tension à fournir par l'autre des ponts.

Selon un mode de réalisation, la consigne est calculée en sorte que le convertisseur ait un fonctionnement de type PFC (de l'anglais "Power Factor Correction" - Correction du Facteur de Puissance).

Selon un mode de réalisation, lesdits calculs sont en outre basés sur une égalité souhaitée entre valeurs d'un courant dans le transformateur à l'un des instants de commutation de l'une des deux séquences et à l'un des instants de commutation de l'autre des deux séquences.

Selon un mode de réalisation :
le modèle comprend un premier paramètre représentatif d'une deuxième durée entre instants de commutation des deux séquences dans le premier mode et d'une troisième durée entre instants de commutation des deux séquences dans le deuxième mode ;
la première puissance transférable dans le premier mode est calculée à partir du modèle en utilisant une première valeur du premier paramètre correspondant à une égalité des première et deuxième durées ;
la troisième puissance transférable dans les premier et deuxième modes est calculée à partir du modèle en utilisant une valeur nulle du premier paramètre ; et
la deuxième puissance transférable dans le deuxième mode est calculée à partir du modèle en utilisant la première valeur du premier paramètre correspondant à une égalité des première et troisième durées.

Selon un mode de réalisation :
dans le premier mode, le modèle est déterminé par l'équation suivante : [Math 21] $P = \frac{V {1}^{2}}{4 . m . fsw . L} \left(\left(-4-4.{m}^{2}\right).{x}^{2}+\left(4.{m}^{2}-2.m+2\right).x+m-{m}^{2}\right)$
où P est la puissance transférable, V1 est une tension aux bornes de l'un des deux ponts, x est le premier paramètre, fsw est la fréquence de répétition, L est une valeur d'une inductance de fuite du convertisseur, et m est un rapport entre un rapport des tensions aux bornes des deux ponts et un rapport de transformation du transformateur ; et
dans le deuxième mode, le modèle est déterminé par l'équation suivante : [Math 22] $P = \frac{V {1}^{2}}{4 . fsw . L} \left(1-2.x\right) \left(1-m.\left(1-2.x\right)-4.x\right) .$

Un mode de réalisation prévoit un dispositif configuré pour mettre en œuvre le procédé ci-dessus.

Un mode de réalisation prévoit un convertisseur comprenant le dispositif ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique, un exemple de convertisseur à découpage d'un type auquel s'appliquent les modes de réalisation décrits ;
la figure 2 représente, de manière schématique et sous forme de blocs, un exemple de procédé de commande du convertisseur de la figure 1 ;
la figure 3 représente, de manière schématique et sous forme de chronogrammes, un exemple de séquence de commutations de pont en H utilisée dans des modes de réalisation de procédés de commande de convertisseur ;
la figure 4 représente, de manière schématique et sous forme de chronogrammes, un exemple d'une autre séquence de commutations de pont en H utilisée dans des modes de réalisation de procédés de commande de convertisseur ;
la figure 5 représente, de manière schématique et sous forme de chronogrammes, un exemple de mode de réalisation d'une étape de commande d'un convertisseur à découpage ; et
la figure 6 représente, de manière schématique et sous forme de chronogrammes, un exemple de mode de réalisation d'une autre étape de commande d'un convertisseur à découpage ;
la figure 7 représente, de manière schématique et sous forme de blocs, un mode de réalisation d'encore une autre étape de commande du convertisseur de la figure 1 ;
la figure 8 représente, de manière schématique et par des courbes, un mode de réalisation d'encore une autre étape de commande du convertisseur de la figure 1 ; et
la figure 9 représente, de manière schématique et sous forme de blocs, un mode de réalisation de l'étape de commande de la figure 8.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les éléments de convertisseur tels que des interrupteurs, des circuits de commande rapprochée (en anglais "driver"), un transformateur de convertisseur, une inductance de fuite d'un transformateur ou des éléments capacitifs, ne sont pas décrits en détails, les modes de réalisation décrits étant compatibles avec de tels éléments d'un convertisseur usuel.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

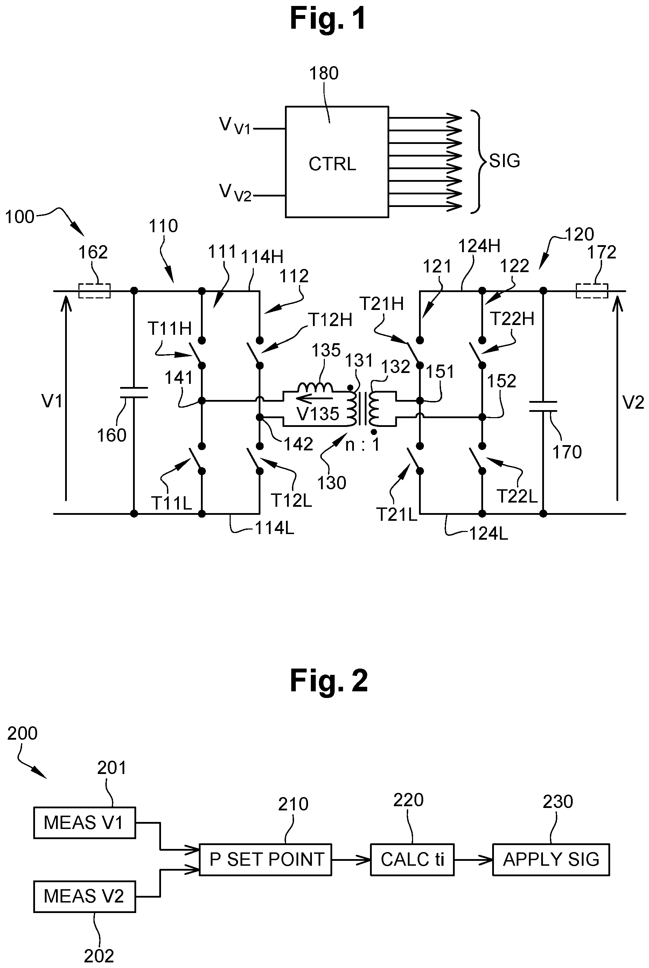

La figure 1 représente, de manière schématique, un exemple de convertisseur à découpage 100 d'un type auquel s'appliquent les modes de réalisation décrits. Plus particulièrement, la figure 1 est une reproduction de la figure 1 du brevet FR 3 110 300, de la demande de brevet EP 3 910 775 et de la demande de brevet US 2021359609.

Dans l'exemple représenté, le convertisseur 100 reçoit une tension V1 et fournit une tension V2.

La tension V1 peut être une tension alternative, ou tension AC (en anglais "AC voltage"), par exemple fournie par une source telle qu'un réseau de distribution électrique. La tension AC peut être de type sinusoïdal ou sensiblement sinusoïdal. La tension AC peut avoir une valeur efficace de l'ordre de 230 V ou de 110 V, et une fréquence égale à 50 Hz ou 60 Hz. La tension AC peut aussi provenir d'un alternateur. En variante, la tension V1 peut être une tension continue, par exemple en provenance d'une batterie ou de cellules photovoltaïques.

La tension V2 peut être une tension continue ou tension DC (en anglais "DC voltage"), par exemple liée à une batterie. A titre d'exemple, le convertisseur 100 peut alors constituer un chargeur de la batterie à partir de la tension V1. La batterie peut être une batterie de véhicule, et la tension DC évolue typiquement entre 250 V et 450 V au cours de la charge de la batterie mais pouvant atteindre des valeurs supérieures, par exemple de l'ordre de 800 V. Le convertisseur est alors prévu pour fournir à la batterie une puissance typiquement comprise entre 1 kW et 30 kW au cours de la charge de la batterie. La tension DC peut également, dans un autre exemple, être fournie à un autre étage, non représenté, du convertisseur. En variante, la tension V2 peut être une tension alternative, par exemple liée à un réseau électrique (le convertisseur constituant alors un onduleur) ou à des bobinages d'un moteur électrique.

Le convertisseur 100 comprend un pont en H 110, par exemple recevant la tension V1. Par pont en H, on entend une association en parallèle d'au moins deux branches (branches 111 et 112 pour le pont en H 110) entre deux bornes ou nœuds (nœuds 114H et 114L pour le pont en H 110).

Chaque branche de pont est définie par une association de deux interrupteurs électriquement en série entre les bornes de la branche. Dans le pont en H 110, la branche 111 comprend des interrupteurs T11H et T11L en série entre les nœuds 114H et 114L, l'interrupteur T11H étant situé du côté du nœud 114H. Dans le pont en H 110, la branche 112 comprend des interrupteurs T12H et T12L en série entre les nœuds 114H et 114L, l'interrupteur T12H étant situé du côté du nœud 114H.

Le convertisseur 100 comprend en outre un pont en H 120, par exemple fournissant la tension V2. Le pont en H 120 comprend deux branches 121 et 122 électriquement en parallèle entre des bornes 124H et 124L. La branche 121 comprend des interrupteurs T21H et T21L en série entre les nœuds 124H et 124L, l'interrupteur T21H étant situé du côté du nœud 124H. La branche 122 comprend des interrupteurs T22H et T22L en série entre les nœuds 124H et 124L, l'interrupteur T22H étant situé du côté du nœud 124H.

Dans des exemples où la tension V1 est une tension AC, chacun des interrupteurs T11H, T11L, T12H, T12L est bidirectionnel en tension, c'est-à-dire qu'il est adapté, à son état bloqué, à empêcher le passage d'un courant dans les deux sens de la tension aux bornes de l'interrupteur bidirectionnel. Plus généralement, les interrupteurs du ou des ponts en H qui, parmi les ponts 110 et 120, fournit et/ou reçoit une tension alternative, sont bidirectionnels en tension. Les modes de réalisation décrits sont compatibles avec les types usuels d'interrupteurs bidirectionnels en tension.

Chaque interrupteur bidirectionnel en tension est commandé par application d'un signal de commande ayant deux niveaux correspondant respectivement aux états passant et bloqué de l'interrupteur. Cette application n'est pas décrite ici en détail, les modes de réalisation étant compatibles avec les procédés usuels d'application à un interrupteur bidirectionnel d'un tel signal de commande.

De préférence, les interrupteurs T11H, T11L, T12H, T12L, T21H, T21L, T22H et T22L des deux ponts sont en outre bidirectionnels en courant, c'est-à-dire chacun adapté, à son état passant, à permettre le passage d'un courant dans les deux sens dans l'interrupteur. Les modes de réalisation décrits sont compatibles avec les types usuels d'interrupteurs bidirectionnels en courant.

Les ponts en H 110 et 120 sont reliés par un transformateur 130. Autrement dit, le transformateur a un enroulement 131 reliant entre eux deux nœuds 141 et 142 de l'un des ponts en H (le pont 110) et un autre enroulement 132 reliant entre eux deux nœuds 151 et 152 de l'autre des ponts en H (le pont 120). Les nœuds 141, 142, 151, 152 sont des nœuds de connexion en série des interrupteurs, respectivement T11H et T11L, T12H et T12L, T21H et T21L, T22H et T22L, des branches respectives 111, 112, 121 et 122 des ponts en H. Dans l'exemple représenté, l'enroulement 131 a un point de phase du côté du nœud 141 et l'enroulement 132 a un point de phase du côté du nœud 152.

Le transformateur 130 comprend une inductance de fuite 135. Dans l'exemple représenté, l'inductance de fuite relie une borne de l'enroulement 131 au nœud 141. L'inductance de fuite 135 peut comprendre un ou plusieurs éléments inductifs, tels que des conducteurs bobinés, électriquement en série avec l'un et/ou l'autre des enroulements 131 et 132. L'inductance de fuite 135 peut également, en totalité ou en partie, résulter d'un couplage magnétique incomplet entre les enroulements 131 et 132. Dans ce cas, le transformateur 130 présente, entre ses enroulements 131 et 132, un coefficient de couplage strictement inférieur à un.

Le transformateur présente, entre les enroulements 132 et 131, un rapport de transformation n (n : 1). Par rapport de transformation entre un premier enroulement et un deuxième enroulement, on entend un rapport ou ratio entre un nombre de spires du deuxième enroulement et un nombre de spires du premier enroulement. Si le transformateur 130 est déconnecté du dispositif et si une tension est appliquée aux bornes de l'enroulement 132, le rapport de transformation est, typiquement, sensiblement égal au rapport entre une tension aux bornes de l'enroulement 131 et la tension appliquée. Le rapport de transformation dépend des tensions mises en jeu et de la puissance à transférer par le convertisseur. A titre d'exemple, le rapport de transformation n est compris entre 0,5 et 2, par exemple entre 0,5 et 1, préférentiellement de l'ordre de 0,75.

En fonctionnement, dans chaque branche, les deux interrupteurs sont commandés en inverse, c'est-à-dire de sorte que, lorsque l'un des interrupteurs de la branche est à l'état passant ou fermé, l'autre des interrupteurs de la branche est à l'état bloqué ou ouvert.

De préférence, dans chacune des branches 111, 112, 121 et 122, les interrupteurs sont mis alternativement aux états passant et bloqué à une fréquence de découpage fsw. Autrement dit, chaque branche est commutée alternativement, de manière répétée, entre un état où l'un des interrupteurs de la branche est passant et un autre état où l'autre des interrupteurs est passant. Typiquement, à chaque commutation, un temps mort est prévu, pendant lequel les deux interrupteurs de la branche commutée sont bloqués simultanément, afin d'éviter une mise en court-circuit des bornes de la branche. Ainsi, les deux interrupteurs d'une branche peuvent être bloqués simultanément, mais sont commandés pour ne pas être passants simultanément.

A titre d'exemple, lorsque la tension V1, respectivement V2, est une tension AC, la valeur de cette tension est considérée constante sur une période de découpage égale à 1/fsw lorsque la fréquence de la tension V1, respectivement V2, est très supérieure, par exemple au moins 10 fois supérieure, de préférence au moins 100 fois supérieure, à la fréquence de découpage fsw.

Dans chaque pont, les commutations des branches forment une séquence de commutations. Les séquences de commutations des deux branches sont répétées à la fréquence de découpage. A chaque répétition des séquences de commutations, l'inductance de fuite a pour rôle de stocker/déstocker de l'énergie, de manière à faire circuler cette énergie d'un pont à l'autre du convertisseur.

Pour cela, l'inductance de fuite 135 a, à ses bornes, une tension variable équivalente à une tension V135 aux bornes de l'inductance de fuite représentée. Plus précisément, la tension V135 est située entre le nœud 141 et l'enroulement 131. Le calcul de la valeur de la tension V135 aux bornes de l'inductance de fuite 135 en fonction de la convention choisie pour représenter cette inductance de fuite est à la portée de l'homme du métier à partir des exemples de la présente description.

A titre d'exemple, le convertisseur comprend en outre un élément capacitif 160 reliant les bornes 114L et 114H du pont en H 110. L'élément capacitif 160 peut être constitué par un condensateur et/ou plusieurs condensateurs en série et/ou en parallèle.

A titre d'exemple, la tension V1 est appliquée entre les nœuds 114H et 114L au travers d'une impédance 162.

A titre d'exemple, l'élément capacitif 160 et l'impédance 162 forment un filtre permettant de limiter des variations, à chaque commutation, de la tension V1 et/ou du courant fourni au convertisseur.

A titre d'exemple, le convertisseur comprend en outre un élément capacitif 170 reliant les bornes 124L et 124H du pont en H 120. L'élément capacitif 170 peut être constitué par un condensateur et/ou plusieurs condensateurs en série et/ou en parallèle.

A titre d'exemple, la tension V2 entre les nœuds 124H et 124L est fournie par le convertisseur au travers d'une impédance 172.

L'élément capacitif 170 et l'impédance 172 forment par exemple un filtre permettant de limiter des variations, à chaque commutation, de la tension V2 et/ou du courant fourni par le convertisseur.

Le convertisseur 100 comprend en outre un circuit de commande 180 (CTRL). Le circuit de commande 180 reçoit des valeurs V_{V1} et V_{V2} représentatives des tensions respectives V1 et V2. Les valeurs V_{V1} et V_{V2} peuvent être générées par tout dispositif usuel, non représenté, de mesure d'une tension entre deux bornes.

Le circuit de commande 180 fournit des signaux SIG de commande des interrupteurs T11H, T11L, T12H, T12L, T21H, T21L, T22H et T22L. Le circuit de commande 180 peut être constitué par tout dispositif adapté à mettre en œuvre un procédé de commande du convertisseur, et en particulier à générer les signaux de commande SIG.

Par exemple, le circuit de commande 180 comprend une unité de traitement numérique de données, telle qu'un microprocesseur, et une mémoire. La mémoire comprend par exemple un programme qui, lorsqu'il est lu et exécuté par l'unité de traitement provoque la mise en œuvre du procédé de commande du convertisseur, c'est-à-dire la production des commandes SIG.

Les commandes SIG sont appliquées aux interrupteurs d'une manière usuelle par des circuits non représentés, tels que des circuits de commande rapprochée et/ou des circuits d'isolement entre des potentiels de référence des commandes des interrupteurs et du circuit de commande 180.

La figure 2 représente, de manière schématique et sous forme de blocs, un exemple de procédé 200 de commande du convertisseur de la figure 1. Plus particulièrement, la figure 2 est une reproduction de la figure 2 du brevet français et des demandes de brevets US et EP susmentionnés.

A une étape 201 (MEAS V1), la tension V1 entre les bornes 114H et 114L est mesurée. Il en résulte la valeur V_{V1} (figure 1) représentative de la tension V1.

En variante, la tension V1 est prédéfinie. Dans le cas où la tension V1 est alternative, l'étape 201 peut alors être constituée par toute étape de génération d'une valeur représentative des valeurs de la tension V1 en fonction du temps, par exemple par toute étape de génération de valeurs évoluant de manière sinusoïdale en phase avec la tension V1. La valeur V_{V1} peut aussi être une constante prédéfinie, dans le cas où la tension V1 est continue et prédéfinie.

A une étape 202 (MEAS V2), la tension V2 entre les bornes 124H et 124L est mesurée. Il en résulte la valeur V_{V2} (figure 1) représentative de la tension V2. Les étapes 201 et 202 peuvent être simultanées.

A une étape 210 (P SET POINT), le circuit de commande 180 (figure 1) reçoit les valeurs V_{V1} et V_{V2} obtenues aux étapes 201 et 202. Le circuit de commande 180 détermine, c'est-à-dire calcule, à partir des valeurs V_{V1} et/ou V_{V2}, une consigne de puissance P* (non représentée en figure 2), représentative d'une puissance à transférer par le convertisseur à partir pont en H 110 jusqu'au pont en H 120.

A titre d'exemple, le convertisseur a une consigne de puissance moyenne à fournir sur une ou plusieurs alternances de la tension alternative. Cette puissance moyenne peut correspondre à une puissance à fournir par exemple à une batterie en charge. La consigne P* peut alors être déterminée à partir de la seule valeur V_{V1}.

Cet exemple n'est pas limitatif, et, dans d'autres exemples pouvant correspondre à une utilisation différente d'une charge d'une batterie, la consigne P* est déterminée à partir des valeurs V_{V1} et V_{V2}.

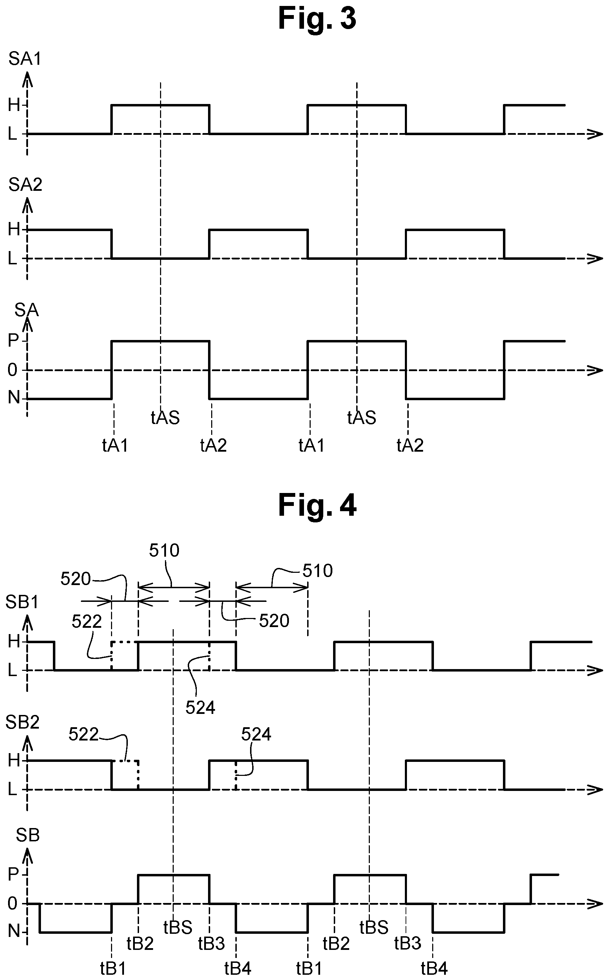

Par exemple, une détermination de la consigne de puissance P* est décrite dans le brevet français et les demandes de brevet US et EP susmentionnés, en relation avec la figure 3 de ces documents. Dans cet exemple, la consigne de puissance P* est égale à une puissance cible P1 que l'on souhaite que le convertisseur prélève sur la source de tension V1, moins une puissance P160 représentant la puissance fournie à l'élément capacitif 160 (figure 1) lors des variations de la tension V1. La consigne P* correspond alors à la puissance que l'on souhaite que le convertisseur prenne à la source de tension V1, en vue d'obtenir un fonctionnement de type PFC du convertisseur, ce qui signifie, par exemple, un fonctionnement où le convertisseur absorbe un courant sinusoïdal préférentiellement en phase avec la tension. Un fonctionnement de type PFC évite de créer un déphasage et/ou des harmoniques dans le courant consommé par rapport à la tension d'entrée.

Les puissances P1 et P160 sont des grandeurs algébriques pouvant chacune prendre des valeurs positives et négatives. Par grandeur algébrique fournie à un élément, on entend que, lorsque la grandeur algébrique prend une valeur positive, celle-ci est effectivement fournie à l'élément, et que, lorsque la grandeur algébrique prend une valeur négative, celle-ci est, en valeur absolue, fournie par cet élément. La consigne P* peut également prendre des valeurs positive et négative. Par consigne négative d'une puissance à transférer du pont en H 110 (figure 1) au pont en H 120 (figure 1), on entend qu'une puissance représentée par la valeur absolue de cette consigne est à transférer du pont en H 120 au pont en H 110. Dit encore autrement, on souhaite que de l'énergie circule dans les deux sens entre les ponts du convertisseur.

Après les étapes 201 et 202, à une étape 220 (CALC ti), le circuit de commande 280 calcule des instants ti, répétés à la fréquence de découpage, des commutations à appliquer aux interrupteurs T11H, T11L, T12H, T12L, T21H, T21L, T22H et T22L des branches 111, 112, 121 et 122.

Pour calculer les instants de commutation ti, un modèle du convertisseur est utilisé. Le modèle fournit, en fonction des tensions V1 et éventuellement V2, et des instants de commutation ti, une prédiction du fonctionnement du convertisseur. Le modèle fournit ainsi des valeurs modélisées, autrement dit prédites, c'est-à-dire des valeurs estimées à partir du modèle. Ces valeurs sont par exemple des courants, des tensions et/ou des puissances dans divers éléments du convertisseur, tels que les interrupteurs ou le transformateur. Le modèle est, de préférence, en sorte que, en fonctionnement, ces courants, tensions et/ou puissances prennent des valeurs sensiblement égales, de préférence égales, aux valeurs modélisées.

En particulier, le modèle fournit une valeur modélisée P de puissance transférée par le convertisseur du pont 110 au pont 120. Les calculs effectués à l'étape 220 sont en sorte que les instants ti sont ceux pour lesquels la valeur modélisée permet le transfert d'une puissance égale à la consigne P*, par exemple en sorte que la valeur modélisée soit égale à la valeur de consigne. Autrement dit, le calcul des instants ti est basé sur une égalité entre :
- la valeur de puissance représentée par la consigne de puissance P* ; et
- une puissance calculée à partir du modèle du convertisseur 100 et des valeurs V_{V1} et éventuellement V_{V2}.

A une étape 230 (APPLY SIG), les signaux de commande SIG obtenus à l'étape 220 sont appliqués aux interrupteurs du convertisseur. Les signaux de commande SIG (figure 1) à appliquer aux interrupteurs du convertisseur sont fournis par le circuit de commande 180 à partir des instants ti calculés.

Le procédé de la figure 2 est, typiquement, mis en œuvre de manière répétée, les étapes de mesure 201 et 202 étant par exemple effectuées en continu, et les étapes 210 et 220 étant par exemple mises en œuvre à chaque boucle d'un programme du dispositif 180 (figure 1).

La figure 3 représente, de manière schématique et sous forme de chronogrammes, un exemple de séquence SA de commutations de pont en H utilisée dans des modes de réalisation de procédés de commande d'un convertisseur du type de celui de la figure 1. Plus particulièrement, la figure 3 est une reproduction de la figure 4 du brevet et des demandes de brevets susmentionnés.

A titre d'exemple, la séquence des commutations SA est appliquée au pont en H 110 (figure 1). La séquence de commutations SA est répétée à la fréquence de découpage.

La séquence de commutations SA comprend deux cycles de commutations SA1 et SA2 répétés dans les deux branches respectives 111 et 112 du pont en H 110. A titre d'exemple, on a représenté, pour chacun des cycles de commutations SA1 et SA2, des niveaux bas (L) et haut (H) correspondant aux états respectivement passant et bloqué de l'interrupteur T11H, T12H, de la branche à laquelle le cycle de commutations est appliqué. Autrement dit, les états représentés des cycles SA1 et SA2 correspondent aux commandes des interrupteurs respectifs T11H et T12H. Les commandes, non représentées, des interrupteurs T11L et T12L sont, à des temps morts près, inverses des commandes représentées des interrupteurs respectifs T11H et T12H.

Autrement dit, aux temps morts près, dans l'exemple où le cycle SA est appliqué au pont 110, pour chacun des cycles SA1 et SA2 :
- le niveau haut correspond à un état passant de l'interrupteur respectif T11H, T12H et à un état bloqué de l'interrupteur respectif T11L, T12L ; et
- le niveau bas correspond à un état bloqué de l'interrupteur respectif T11H, T12H, et à un état passant de l'interrupteur respectif T11L, T12L.

Les cycles SA1 et SA2 sont, de préférence, inverses l'un de l'autre. Autrement dit, les interrupteurs T11H et T12H du pont 110, situés du côté de la même borne 114H du pont 110, sont commandés en inverse l'un de l'autre. De même, les interrupteurs T11L et T12L du pont 110, situés du côté de la même borne 114L du pont 110, sont commandés en inverse l'un de l'autre.

Ainsi, à un instant tA1 de chaque répétition de la séquence SA, la séquence SA comprend deux commutations simultanées des cycles SA1 et SA2. A l'instant tA1, à des temps morts près, le pont 110 commute, autrement dit bascule, d'un état N à un état P. A l'état N, pour deux interrupteurs (T11H et T12H, ou T12L et T11L) du pont 110 situés du côté d'une même borne (respectivement 114H ou 114L) du pont 110, les états bloqué et passant sont commandés respectivement, et à l'état P, les états passant et bloqué sont commandés respectivement pour ces deux interrupteurs.

De manière similaire, à un instant tA2 de chaque répétition de la séquence SA, le pont 110 commute de l'état P vers l'état N à des temps morts près.

A chaque répétition de la séquence de commutations, les instants tA1 et tA2 d'entrée et sortie de l'état P sont situés symétriquement par rapport à un instant tAS. L'instant tAS peut, en variante, être défini par celui par rapport auquel les instants tA2 et tA1 d'entrée et sortie de l'état N sont situés symétriquement.

Chacun des cycles SA1 et SA2 a un rapport cyclique défini par la durée pendant laquelle le cycle SA1, SA2 est au niveau de commande de l'état passant de l'interrupteur respectif T11H, T12H (niveau haut). Dans le cas de cycles SA1 et SA2 inverses l'un de l'autre, les rapports cycliques des cycles SA1 et SA2 ont, à des temps morts près, leur somme égale à 1.

De préférence, les rapports cycliques des cycles SA1 et SA2 sont sensiblement égaux à 0,5, plus préférentiellement égaux à 0,5 à des temps morts près. Autrement dit, les cycles SA1 et SA2 inverses l'un de l'autre sont également en opposition de phase à des temps morts près. Il en résulte que la séquence SA a des durées identiques pour les deux états N et P à des temps morts près. A chaque répétition de la séquence SA, ces durées identiques sont situées symétriquement par rapport à l'instant tA1 ou à l'instant tA2. Ainsi, les états N et P de la séquence SA sont disposés symétriquement par rapport à l'instant tAS à des temps morts près.

La séquence de commutations SA, décrite ci-dessus dans son application au pont en H 110, peut être appliquée au pont en H 120 (figure 1) de manière similaire, en remplaçant, par rapport à l'application au pont 110 décrite ci-dessus, les branches 111 et 112 respectivement par les branches 121 et 122 (figure 1). Plus précisément, pour cela, par rapport à l'application au pont 110 décrite ci-dessus, on remplace les interrupteurs T11H, T11L, T12H et T12L, respectivement, par les interrupteurs T21H, T21L, T22H et T22L.

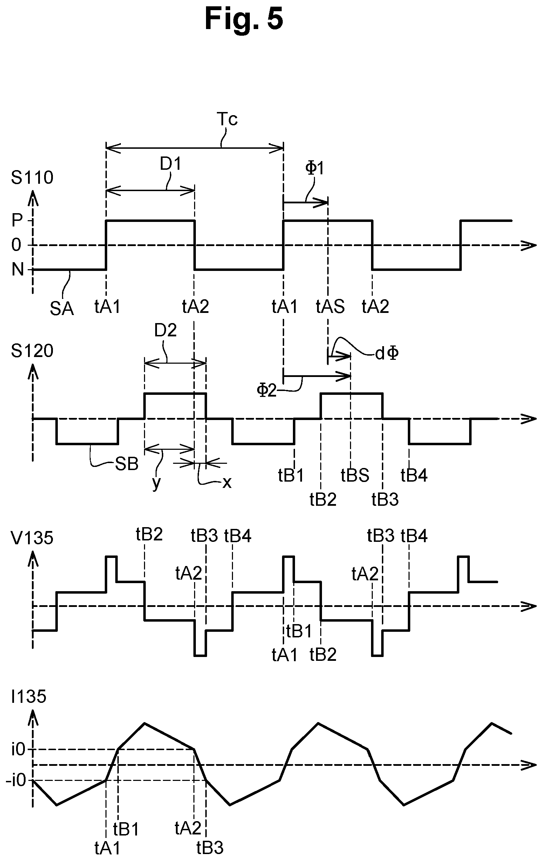

La figure 4 représente, de manière schématique et sous forme de chronogrammes, un exemple d'une autre séquence de commutations de pont en H utilisée dans des modes de réalisation de procédés de commande d'un convertisseur du type de celui de la figure 1. Plus particulièrement, la figure 4 est une reproduction de la figure 5 du brevet et des demandes de brevets susmentionnés.

A titre d'exemple, la séquence des commutations SB est appliquée au pont en H 120 (figure 1). La séquence de commutations SB est répétée à la même fréquence de découpage que la séquence SA de la figure 4.

La séquence de commutations SB comprend deux cycles de commutations SB1 et SB2 répétés dans les deux branches respectives 121 et 122 du pont en H 120. A titre d'exemple, on a représenté, pour chacun des cycles de commutations SB1 et SB2, des niveaux bas (L) et haut (H) correspondant aux états respectivement passant et bloqué de l'interrupteur T21H, T22H de la branche à laquelle le cycle de commutations est appliqué. Autrement dit, les états représentés des cycles SB1 et SB2 correspondent aux commandes des interrupteurs respectifs T21H et T22H. Les commandes, non représentées, des interrupteurs T21L et T22L sont, à des temps morts près, inverses des commandes représentées des interrupteurs respectifs T21H et T22H.

Autrement dit, aux temps morts près, dans l'exemple où le cycle SB est appliqué au pont 120, pour chacun des cycles SB1 et SB2 :
- le niveau haut correspond à un état passant de l'interrupteur respectif T21H, T22H et à un état bloqué de l'interrupteur respectif T21L, T22L ; et
- le niveau bas correspond à un état bloqué de l'interrupteur respectif T21H, T22H, et à un état bloqué de l'interrupteur respectif T21L, T22L.

Chacun des cycles SB1 et SB2 a un rapport cyclique défini par la durée pendant laquelle le cycle SB1, SB2 est au niveau de commande de l'état passant de l'interrupteur respectif T21H, T22H (niveau haut). De préférence, les rapports cycliques des cycles SB1 et SB2 sont sensiblement égaux à 0,5, plus préférentiellement égaux à 0,5 à des temps morts près.

Les cycles SB1 et SB2 sont, de préférence, déphasés l'un par rapport à l'autre. Autrement dit, les cycles SB1 et SB2 ont un même rapport cyclique et présentent des périodes 510 pendant lesquelles les cycles SB1 et SB2 sont à des niveaux différents.

Il en résulte, à chaque répétition de la séquence SB :
- un instant tB1 de commutation du cycle SB2 de son état haut vers son état bas. Le pont 120 commute d'un état N vers un état O ;
- un instant tB2 de commutation du cycle SB1 de son état bas vers son état haut. Le pont 120 commute de l'état O vers l'état P ;
- un instant tB3 de commutation du cycle SB2 de son état bas vers son état haut. Le pont 120 commute de l'état P vers l'état O ; et
- un instant tB4 de commutation du cycle SB1 de son état haut vers son état bas. Le pont 120 commute de l'état O vers l'état N. La séquence SB retourne alors dans son état initial avant l'instant tB1.
Les instants tB1, tB2, tB3 et tB4 se succèdent à chaque séquence, dans cet ordre ou peuvent être permutés selon l'état initial choisi de la séquence SB.

Les états N et P du pont 120 correspondent aux états N et P décrits en relation avec la figure 3, à savoir que, pour les deux interrupteurs du pont situés du côté d'une même borne du pont, à l'état N, les états bloqué et passant sont commandés respectivement, et, à l'état P, les états passant et bloqué sont commandés respectivement. L'état O correspond à un état dans lequel deux interrupteurs du pont 120 situés du côté de l'une des bornes du pont 120 sont simultanément à l'état passant, les deux autres interrupteurs du pont (situés du côté de l'autre des bornes du pont 120) sont alors à l'état bloqué. Ainsi, à l'état O, la configuration des interrupteurs du pont 120 correspond à l'une parmi :
- la configuration dans laquelle les interrupteurs T21H et T22H sont passants et les interrupteurs T21L et T22L sont bloqués ; et
- la configuration dans laquelle T21H et T22H sont bloqués et les interrupteurs T21L et T22L sont passants.

A chaque répétition de la séquence de commutations, les instants tB2 et tB3 d'entrée et sortie de l'état P sont, aux temps morts près, situés symétriquement par rapport à un instant tBS. L'instant tBS peut, en variante, être défini par celui par rapport auquel les instants tB4 et tB1 d'entrée et sortie de l'état N sont, aux temps morts près, situés symétriquement, ou par celui par rapport auquel les instants tB1 et tB2, ou tB3 et tB4, sont, aux temps morts près, situés symétriquement.

Pendant chacune des périodes 510, la séquence SB est à l'un des états N ou P. Les état N et P sont alternés dans les périodes 510 successives. Les périodes 510 sont séparées de périodes 520 pendant lesquelles la séquence est à l'état O.

Du fait que les rapports cycliques des cycles SB1 et SB2 sont égaux, les périodes 520 ont des durées identiques. En outre, du fait que les rapports cycliques des cycles SB1 et SB2 sont égaux à 0,5, la séquence SB est telle que les périodes 510 ont des durées identiques pour les deux états N et P. Il en résulte que les états N, O et P de la séquence SB sont disposés symétriquement par rapport à l'instant tBS.

Le fait de prévoir que les séquences SA (figure 3) et SB (figure 4) aient leurs états, respectivement N et P, et N, O et P, disposés symétriquement par rapport aux instants respectifs tAS et tBS permet, en fonctionnement, d'éviter la présence d'une composante continue du courant (I135, figure 1) dans le transformateur 130 (figure 1).

Dans des variantes des modes de réalisation, on peut prévoir toutes autres valeurs de rapports cycliques et/ou de déphasage des cycles SA1, SA2 et SB1, SB2 des séquences respectives SA et SB permettant de garantir l'absence d'une telle composante continue. Cependant, la prévision de séquences SA et SB symétriques par rapport aux instants tAS et tBS permet plus simplement d'éviter la composante continue. En outre, il en résulte avantageusement que le courant dans le transformateur présente, dans ses deux sens de circulation, des évolutions symétriques l'une par rapport à l'autre, ce qui simplifie l'obtention d'une valeur modélisée du courant dans le transformateur en fonction du temps et d'une puissance modélisée P telle que celle définie en relation avec la figure 2.

Bien que l'état O de la séquence SB résulte, dans l'exemple des cycles SB1 et SB2 décrits ci-dessus, du déphasage des cycles SB1 et SB2 l'un par rapport à l'autre, en variante, on peut prévoir que l'état O de la séquence SB soit obtenu de manière différente de celle décrite ci-dessus, par exemple :
- par remplacement, à l'instant tB1, de la commutation du cycle SB2 de l'état haut vers l'état bas par une commutation du cycle SB1 de l'état bas vers l'état haut et, à l'instant tB2, de la commutation du cycle SB1 de l'état bas vers l'état haut par une commutation du cycle SB2 de l'état haut vers l'état bas (pointillés 522) ; et/ou
- par remplacement, à l'instant tB3, de la commutation du cycle SB2 de l'état bas vers l'état haut par une commutation du cycle SB1 de l'état haut vers l'état bas et, à l'instant tB2, de la commutation du cycle SB1 de l'état haut vers l'état bas par une commutation du cycle SB2 de l'état bas vers l'état bas (pointillés 524).

La séquence de commutations SB, décrite ci-dessus dans son application au pont en H 120, peut être appliquée au pont en H 110 (figure 1) de manière similaire, en remplaçant, par rapport à l'application au pont 120 décrite ci-dessus, les branches 121 et 122 respectivement par les branches 111 et 112 (figure 1). Plus précisément, pour cela, par rapport à l'application au pont 120 décrite ci-dessus, on remplace les interrupteurs T21H, T21L, T22H et T22L respectivement par les interrupteurs T11H, T11L, T12H et T12L.

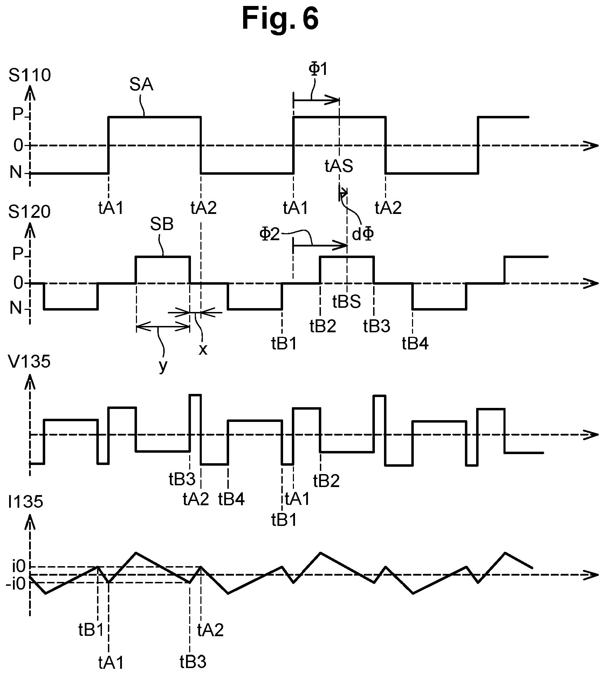

Les figures 5 et 6 représentent, de manière schématique et sous forme de chronogrammes, des exemples de modes de réalisation d'étapes d'un procédé de commande d'un convertisseur du type du convertisseur 100 de la figure 1. Par exemple, ces étapes sont mises en œuvre à l'étape 220 (figure 2) de calcul des instants ti de commutation des ponts et de génération des signaux de commande à appliquer aux ponts. Ces exemples ne prennent pas en compte les temps morts de commutation.

Chacune des figures 5 et 6 représente des allures en fonction du temps t normalisé par la période de découpage Tc :
- d'une séquence S110 de commutation du pont H 110 ;
- d'une séquence S120 de commutation du pont H 120 ;
- de la tension V135 (figure 1) aux bornes de l'inductance de fuite 135 du transformateur 130 ; et
- d'un courant I135 circulant dans l'inductance de fuite (c'est-à-dire, dans l'exemple représenté en figure 1, dans l'enroulement 131 du transformateur).

A chacune des étapes des figures 5 et 6, les séquences SA et SB des figures 3 et 4 sont utilisées, et les instants de commutation tA1, tA2, tB1, tB2, tB3 et tB4 des séquences SA et SB sont calculés. Ces instants correspondent aux instants ti décrits en relation avec la figure 2.

Dans les exemples des figures 5 et 6, la tension V1 est positive, et appliquée dans un sens donné (entre les nœuds 141 et 142, figure 1) à un état P de la séquence S110, et dans un sens opposé (entre les nœuds 142 et 141) à un état N de la séquence S110. Autrement dit, les états N et P de la séquence S110 correspondent aux sens respectifs d'application de la tension V1 au transformateur par le pont en H 110. Une tension nulle est appliquée entre les nœuds 141 et 142 (autrement dit, ces nœuds sont mis en court-circuit) à un état O de la séquence S110.

De même, la tension V2 est positive et appliquée dans un sens donné (entre les nœuds 151 et 152, figure 1) à un état P de la séquence S120, et dans un sens opposé (entre les nœuds 142 et 141) à un état N de la séquence S120. Autrement dit, les états N et P de la séquence S120 correspondent aux sens respectifs d'application de la tension V2 au transformateur par le pont en H 120. Une tension nulle est appliquée entre les nœuds 151 et 152 à un état O de la séquence S120.

La figure 5 illustre un premier mode de fonctionnement ou de commande du convertisseur. Plus particulièrement, la figure 5 est une reproduction de la figure référencée 6A du brevet et des demandes de brevets susmentionnés.

En figure 5, il est considéré à titre d'exemple que la tension V2 aux bornes du pont en H 120, multipliée par le rapport de transformation n (c'est-à-dire une valeur de tension n*V2) est supérieure à la valeur crête de la tension V1 aux bornes du pont en H 110. Dit autrement, la valeur de tension n*V2, est supérieure à celle de la tension V1. Dit encore autrement, le rapport ou ratio V1/V2 entre tensions aux bornes, respectivement, du pont en H 110 et du pont en H 120, est inférieur au rapport de transformation n entre l'enroulement 132 situé du côté du pont en H 120 et l'enroulement 131 situé du côté du pont en H 110. En outre, on prévoit que l'énergie circule du pont en H 110 vers le pont en H 120.

Dit autrement, dans l'exemple de la figure 5, le convertisseur 100 (figure 1) est considéré fonctionner en mode élévateur ("boost" en anglais) et la puissance transférée du pont 110 vers le pont 120 est considérée positive.

Dans le premier mode de fonctionnement, la séquence SA décrite ci-dessus en relation avec la figure 3 est appliquée au pont en H 110, de manière répétée à la fréquence de découpage. Ainsi, la séquence S110 correspond à la séquence SA. Autrement dit, les états P et N de la séquence S110 correspondent aux états respectifs P et N de la séquence SA, et la séquence S110 ne prend pas l'état O. En outre, la séquence SB décrite ci-dessus en relation avec la figure 4 est appliquée au pont en H 120, de manière répétée à la fréquence de découpage. Ainsi, la séquence S120 correspond à la séquence SB. Autrement dit, les états P, O et N de la séquence S110 correspondent aux états respectifs P, O et N de la séquence SB.

Dans le premier mode de fonctionnement, les commutations d'entrée et sortie d'un état donné de la séquence SB parmi les états N et P se produisent à des états différents de la séquence SA. Dans la présente étape, les commutations d'entrée tB2 et de sortie tB3 de l'état P de la séquence SB se produisent respectivement aux états P et N de la séquence SA. Les commutations d'entrée tB4 et de sortie tB1 de l'état N de la séquence SB se produisent respectivement aux états N et P de la séquence SA. Autrement dit, une commutation (ici à l'instant tA2) de la séquence SA a lieu entre les commutations d'entrée et sortie (instants tB2, tB3) de l'état P de la séquence SB. Une commutation (ici à l'instant tA1) de la séquence SA a lieu entre les commutations d'entrée et sortie (instants tB4, tB1) de l'état N la séquence SB.

Les instants de commutation tB1, tB2, tB3 et tB4 de la séquence SB sont définis par rapport aux instants tA1 et tA2 de la séquence SA par deux paramètres x et y. Les paramètres x et y sont compris entre 0 et 0,5 et correspondent chacun à une fraction du temps de cycle Tc de découpage (inverse de la fréquence de découpage). La durée y*Tc (représentée par la lettre y) sépare chaque instant tB2 de l'instant tA2 suivant, et la durée x*Tc (représentée par la lettre x) sépare chaque instant tA2 de l'instant tB3 suivant. Autrement dit, les paramètres x et y constituent des valeurs représentatives d'écarts (ou durées) entre les instants de commutation, respectivement tA2 et tB3, et tB2 et tA2. Les paramètres x et y sont calculés de sorte que les instants ti sont ceux pour lesquels la valeur modélisée permet le transfert d'une puissance égale à la consigne P*, par exemple en sorte que la valeur modélisée de puissance transmise soit égale à la valeur de consigne.

Les séquences SA et SB sont ensuite générées, ou appliquées aux ponts 110 et 120, à partir des paramètres x et y calculés. Les séquences SA et SB ont entre elles un déphasage dϕ entre l'instant tAS et l'instant tBS. Les séquences sont alors appliquées aux ponts en H 110 et 120.

De préférence, pour générer les séquences SA et SB, un instant de référence des séquences est défini. Cet instant est par exemple généré par un signal de type horloge à la fréquence de découpage. A titre d'exemple, l'instant de référence est, dans cet exemple, l'instant tA1 de passage à l'état P de la séquence S110 appliquée au pont en H 110. Les autres instants de commutation des séquences SA et SB sont définis par :
- un déphasage *φ*1 de la séquence S110 entre l'instant tA1 de référence des séquences et l'instant tAS de symétrie de la séquence SA appliquée au pont en H 110 ;
- un déphasage *φ*2 de la séquence S120 entre l'instant tA1 de référence des séquences et l'instant tBS de symétrie de la séquence SB appliquée au pont en H 120 ;
- un rapport cyclique D1 de la séquence S110, défini par le rapport entre la durée d'un état P de la séquence S110, et le temps de cycle Tc ; et
- un rapport cyclique D2 de la séquence S120, défini par le rapport entre la durée d'un état P de la séquence S120, et le temps de cycle Tc.

Les déphasages *φ*1 et *φ*2, et les rapports cycliques D1 et D2, sont donnés par les égalités suivantes : [Math 1] $\begin{matrix}D 1 = 0 , 5 \\ φ 1 = \frac{π}{2} \\ D 2 = x + y \\ φ 2 = 2 . π . \left(\frac{1}{2}+\frac{x - y}{2}\right)\end{matrix}$

La tension V135 prend les valeurs -V1-n*V2, -V1, V1-n*V2, n*V2-V1, V1, et V1+n*V2 lorsque les états respectifs des séquences S110 et S120 sont, respectivement, N et P, N et O, P et P, N et N, P et O, et P et N, à savoir, respectivement, entre les instants tA2 et tB3, tB3 et tB4, tB2 et tA2, tB4 et tA1, tB1 et tB2, et tA1 et tB1.

De préférence, pour calculer les paramètres x et y, on cherche les valeurs de ces paramètres qui permettent d'obtenir une égalité entre les valeurs i0 du courant I135 dans le transformateur aux instants tB1 et tA2. Autrement dit, les paramètres x et y, et donc, à partir de ces paramètres, les instants tA1, tA2, tB1, tB2, tB3 et tB4, résultent de calculs basés sur une égalité souhaitée, ou ciblée, entre les valeurs i0 du courant I135 dans le transformateur aux instants tB1 de la séquence SB et tA2 de la séquence SA, les instants tB1 et tA2 étant séparés par l'instant tB2 de la séquence SB.

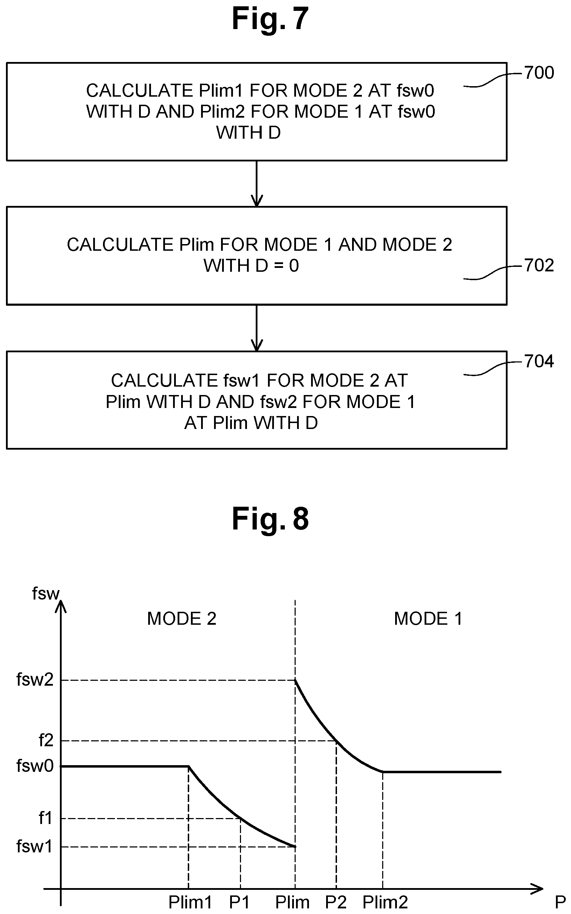

Pour cela, on utilise un modèle du convertisseur, de la manière décrite en relation avec la figure 2. Le modèle fournit des valeurs modélisées du courant I135 aux instants tB1 et tA2 en fonction des paramètres x et y, en tenant compte de valeurs telles que celles des tensions V1 et V2 aux bornes des ponts 110 et 120. Le modèle du convertisseur peut être tout modèle usuel d'un convertisseur comprenant deux ponts en H reliés par un transformateur. Un exemple d'un modèle du convertisseur est décrit en relation avec la figure 8 des demandes susmentionnées, et correspond à une ou plusieurs expressions algébriques fournissant la valeur modélisée du courant I135 en fonction du temps t et des paramètres x et y.

De préférence, le calcul des paramètres x et y consiste à choisir, parmi toutes les valeurs possibles des paramètres x et y, celles pour lesquelles le courant I135 a, aux instants tB1 et tA2, les mêmes valeurs modélisées. Autrement dit, les valeurs calculées des paramètres x et y sont celles pour lesquelles une relation d'égalité entre les valeurs modélisées en fonction des paramètres x et y est satisfaite ou vérifiée. Ceci peut être obtenu par tout procédé usuel de recherche de paramètres pour lesquels une relation entre valeurs fonction de ces paramètres est satisfaite.

Comme cela est indiqué et décrit dans le brevet et les demandes de brevet susmentionnés, la relation entre valeurs fonction des paramètres x et y peut être algébrique, et le choix de valeurs des paramètres x et y qui vérifient cette relation peut être effectué en choisissant une seule des deux valeurs (par exemple celle du paramètre x) et en calculant l'autre des deux valeurs à partir de cette relation algébrique, ou peut être calculées numériquement, le procédé de recherche des paramètres x et y étant alors typiquement une recherche numérique par des itérations successives.

Du fait que le courant I135 présente des évolutions symétriques dans ses deux sens de circulation du courant, l'égalité souhaitée entre valeurs i0 du courant I135 aux instants tB1 et tA1 correspond aussi à une égalité souhaitée entre valeurs -i0 du courant I135 aux instants tA1 et tB3 séparés par l'instant tB2 de commutation, ainsi qu'à des égalités souhaitées, en valeur absolue, du courant I135 aux instants consécutifs (c'est-à-dire non séparés par une commutation) tA1 et tB1, et/ou aux instants consécutifs tA2 et tB3.

Dans des variantes, le calcul des paramètres x et y peut être effectué sur la base de toute relation souhaitée définie en fonction du courant dans le transformateur aux instants de commutation des deux séquences. Un exemple d'une telle relation souhaitée est une égalité souhaitée entre un rapport entre valeurs du courant aux instants tB1 et tA2, et une valeur prédéfinie pouvant être différente de 1.

A partir du modèle du convertisseur, en particulier à partir des valeurs modélisées I135 et V135, on peut calculer une valeur modélisée P de la puissance transférée en fonction du temps par le convertisseur du pont en H 110 vers le pont en H 120, en moyenne à chaque répétition des séquences de commutations.

De préférence, le calcul des paramètres x et y consiste alors à choisir, parmi toutes les valeurs possibles des paramètres x et y, celles pour lesquelles la consigne de puissance P* décrite précédemment est égale à la valeur modélisée P. Autrement dit, le calcul des paramètres x et y est basé sur une égalité entre la consigne de puissance P* et la puissance calculée à partir du modèle du convertisseur et des valeurs des tensions V1 et V2.

Dans des exemples de calcul des paramètres x et y, le modèle correspond à une expression algébrique P(x, y) fournissant la valeur P en fonction des paramètres x et y. Le calcul peut alors comprendre tout procédé usuel, par exemple numérique, de résolution l'équation P* = P(x, y) pour obtenir un ensemble de valeurs à choisir pour les paramètres x et y.

Dans d'autres exemples, le modèle du convertisseur est numérique, et les paramètres x et y sont calculés numériquement par tout procédé usuel de résolution de l'équation, tel qu'un procédé itératif.

Plus préférentiellement, le calcul des paramètres x et y, et donc des instants des commutation des séquences SA et SB, est basé à la fois sur l'égalité souhaitée entre courants aux instants tB1 et tA2, et sur l'égalité souhaitée entre la consigne de puissance P* et la puissance transférée par le convertisseur entre les ponts.

Dans des variantes, on peut remplacer la consigne de puissance par toute valeur représentative d'une consigne fournie au convertisseur, telle qu'une consigne d'un courant à prélever sur l'un des ponts et/ou à fournir par l'autre des ponts. L'égalité souhaitée entre la consigne P* et la puissance modélisée est alors remplacée par une égalité entre cette consigne de courant et une valeur moyenne de ce courant, modélisée d'après le modèle du convertisseur, sur chaque répétition des séquences SA et SB.

La figure 5 a été décrite pour un exemple où les tensions V1 et V2 sont positives. Cependant, les tensions V1 et V2 peuvent être des grandeurs algébriques. Lorsque les tensions V1 et/ou V2 sont négatives, la description faite ci-dessus de la figure 5 s'applique en remplaçant les valeurs des tensions V1 et V2 par leurs valeurs absolues, et, par exemple, en permutant les états N et P des séquences respectives S110 et/ou S120.

La figure 6 illustre un deuxième mode de fonctionnement ou de commande du convertisseur. Plus particulièrement, la figure 6 correspond à la figure référencée 7A du brevet et des demandes de brevets susmentionnés, dans laquelle les références x' et y' ont été remplacées par les références respectives x et y.

De même que pour la figure 5, la figure 6 illustre un exemple où les des tensions V1 et V2 ont des valeurs positives, cependant, de manière similaire à ce qui a été indiqué en relation avec la figure 5, la description faite ci-après de la figure 6 s'applique pour des valeurs négatives des tensions V1 et/ou V2.

En figure 6, comme en figure 5, la valeur de tension n*V2 est supérieure à celle de la tension V1, et on prévoit en outre que l'énergie circule du pont en H 110 vers le pont en H 120. Dit autrement, dans l'exemple de la figure 6, le convertisseur 100 (figure 1) est considéré fonctionner en mode élévateur ("boost" en anglais) et la puissance transférée du pont 110 vers le pont 120 est considérée positive.

Comme à l'étape de la figure 5, les séquences SA et SB décrites ci-dessus en relation avec les figures 3 et 4 sont appliquées aux ponts en H 110 et 120, de manière répétée à la fréquence de découpage.

Toutefois, dans le deuxième mode de fonctionnement, les commutations d'entrée et sortie d'un état donné de la séquence SB parmi les états N et P se produisent à un même état de la séquence SA. Dans la présente étape, les commutations d'entrée tB2 et de sortie tB3 de l'état P de la séquence SB se produisent à l'état N de la séquence SA. Les commutations d'entrée tB4 et de sortie tB1 de l'état N de la séquence SB se produisent à l'état P de la séquence SA.

Les instants de commutation tB1, tB2, tB3 et tB4 de la séquence SB sont déterminés par rapport aux instants tA1 et tA2 de la séquence SA par deux paramètres x et y. Les paramètres x et y sont compris entre 0 et 0,5 et correspondent chacun à une fraction du temps de cycle Tc de découpage. La durée y*Tc (représentée par y) sépare chaque instant tB2 de l'instant tB1 suivant, et la durée x*Tc (représentée par x) sépare chaque instant tB3 de l'instant tA2 suivant.

Les paramètres x et y sont, par exemple, calculés de manière similaire à celle décrite en relation avec la figure 5, à savoir, plus préférentiellement :
- sur la base d'une égalité entre valeurs modélisées, calculées à partir du modèle du convertisseur et à partir de valeurs des tensions aux bornes des ponts, d'un courant dans le transformateur à des instants de commutation des séquences SA et SB (par exemple les instants tA1 et tB3) ; et/ou
- sur la base d'une égalité entre la puissance représentée par la consigne P* et la valeur modélisée P de puissance correspondante, calculée à partir du modèle du convertisseur et à partir de valeurs des tensions V1 et V2 aux bornes des ponts.

Les séquences SA et SB sont ensuite générées à partir des paramètres x et y obtenus et appliqués aux ponts en H 110 et 120. Les séquences SA et SB ont entre elles le déphasage dϕ, décrit ci-dessus, entre l'instant tAS et l'instant tBS.

De préférence, les instants de commutation des séquences SA et SB sont définis par rapport à l'instant de référence tA1 par les déphasages *φ*1 et *φ*2 et les rapports cycliques D1 et D2 définis en relation avec la figure 5.

Les déphasages *φ*1 et *φ*2, et les rapports cycliques D1 et D2, sont donnés à partir des paramètres x et y par les égalités suivantes : [Math 2] $\begin{matrix}D 1 = 0 , 5 \\ φ 1 = \frac{π}{2} \\ D 2 = y \\ φ 2 = 2 . π . \left(\frac{1}{2}-x-\frac{y}{2}\right)\end{matrix}$

La tension V135 prend les valeurs -V1, V1-n*V2, n*V2-V1, et V1 lorsque les états respectifs des séquences S110 et S120 sont, respectivement, N et O, P et P, N et N, P et O, à savoir, respectivement, entre les instants tB3 et tB4, tB2 et tA2, tB4 et tA1, tB1 et tB2. Les états respectifs des séquences S110 et S120 sont également, respectivement, N et O, P et O entre les instants, respectivement tB1 et tA1, tB3 et tA2.

Ainsi, dans le présent exemple du deuxième mode de fonctionnement, par rapport à l'exemple du premier mode de fonctionnement de la figure 5, on a remplacé les états respectifs N et P, P et N des séquences S110 et S120 entre les instants tA1 et tB1 (figure 5) et tA2 et tB3 (figure 5), par les états N et O, P et O. Ceci provient du fait que l'état P de la séquence SB commence après l'instant tA1 et se termine avant l'instant tA2, et que l'état N de la séquence SB commence après l'instant tA2 et se termine avant l'instant tA1.

Dans cet exemple, il en résulte que, entre les instants tA1 et tB1 de la figure 6, le courant I135 varie en sens opposé du sens de variation du courant I135 entre les instants tB1 et tA1 de la figure 5. De la même manière, entre les instants tB3 et tA2 de la figure 6, le courant I135 varie en sens opposé du sens de variation du courant I135 entre les instants tA2 et tB3 de l'étape de la figure 5.

Il en résulte que la puissance transférée par le convertisseur est relativement faible dans le deuxième mode de fonctionnement et relativement élevée dans le premier mode de fonctionnement. Ainsi, la consigne de puissance P* détermine si le convertisseur est commandé selon le premier ou le deuxième mode de fonctionnement.

A titre d'exemple, pour un modèle donné de convertisseur, la puissance transférable P dans le premier mode de fonctionnement, dans le cas décrit en relation avec la figure 5, est donnée par l'équation suivante : [Math 3] $P = \frac{{V 1}^{2}}{4 . m . fsw . L} \left(\left(-4-4.{m}^{2}\right).{x}^{2}+\left(4{. m}^{2}-2.m+2\right).x+m-{m}^{2}\right)$ avec fsw la fréquence de répétition ou de découpage, L une valeur de l'inductance de fuite 135 du convertisseur et m un rapport entre un rapport des tensions aux bornes des deux ponts et un rapport de transformation du transformateur, dans cet exemple égal à V1/(V2.n).

Toujours à titre d'exemple, pour le même modèle donné de convertisseur, la puissance transférable P dans le deuxième mode de fonctionnement, dans le cas décrit en relation avec la figure 6, est donnée par l'équation suivante : [Math 4] $P = \frac{{V 1}^{2}}{4 . fsw . L} \left(1-2.x\right) \left(1-m.\left(1-2.x\right)-4.x\right)$

Pour les deux équations [Math 3] et [Math 4] ci-dessus, les égalités de valeurs de courant à deux instants tB1 et tA2 telles qu'elles sont décrites en relation avec les figures 5 et 6 sont respectées.

Les deux équations [Math 3] et [Math 4] ci-dessus ne tiennent pas compte d'éventuels temps morts de commutation, par exemple déterminés de sorte à assurer des commutations en zéro de tension (ZVS) des interrupteurs du convertisseur.

A titre d'exemple, un fonctionnement où la fréquence de découpage fsw est fixée préalablement au calcul des paramètres x et y décrits précédemment pour chacun des premier et deuxième modes de fonctionnement est considéré. La valeur fixée de la fréquence fsw est, par exemple, appelée valeur nominale de la fréquence de découpage (ou de répétition des séquences décrites précédemment).

A titre d'exemple, la valeur nominale de la fréquence de découpage peut être déterminée de la manière indiquée dans le brevet et les demandes de brevet susmentionnés, par exemple être constante ou être calculée à partir des valeurs des tensions V1 et V2 et de la consigne de puissance P*.

Comme cela est décrit en relation avec la figure 8 du brevet et des demandes de brevets susmentionnés, pour cette valeur nominale de fréquence de découpage, la valeur modélisée selon un modèle du convertisseur de la puissance transférée P par le convertisseur du pont en H 110 vers le pont en H 120 peut alors être déterminée en fonction du paramètre x pour chacun des deux modes de fonctionnement, par exemple à partir des équations [Math 3] et [Math 4].

En fonction d'une consigne de puissance P*, il est alors déterminé lequel des premier et deuxième modes de fonctionnement est utilisé et la valeur du paramètre x pour ce mode de fonctionnement, sur la base de l'égalité entre la consigne P* et la valeur modélisée de puissance transférable P.

Dans un tel exemple, lorsque le convertisseur fonctionne selon le deuxième mode et que la consigne de puissance P* augmente au-delà d'une puissance maximale que le deuxième mode de fonctionnement permet de transférer, le convertisseur commute du deuxième mode au premier mode de fonctionnement. De manière similaire, lorsque le convertisseur fonctionne selon le premier mode et que la consigne de puissance P* diminue en deçà d'une puissance minimale que le premier mode de fonctionnement permet de transférer, le convertisseur commute du premier mode au deuxième mode de fonctionnement. Des commutations entre les premier et deuxième modes de fonctionnement sont par exemple décrites dans le brevet et les demandes de brevet susmentionnés, en relation avec leurs figures 8, 9 et 10.

Dans un cas idéal sans temps mort, à la valeur nominale de la fréquence de découpage, la commutation du premier au deuxième mode de fonctionnement, ou du deuxième au premier mode de fonctionnement, s'effectue en commutation à zéro de courant (ZCS de l'anglais "Zero Current Switching"), lorsque le paramètre x des équations [Math 3] et [Math 4] est égal à 0.

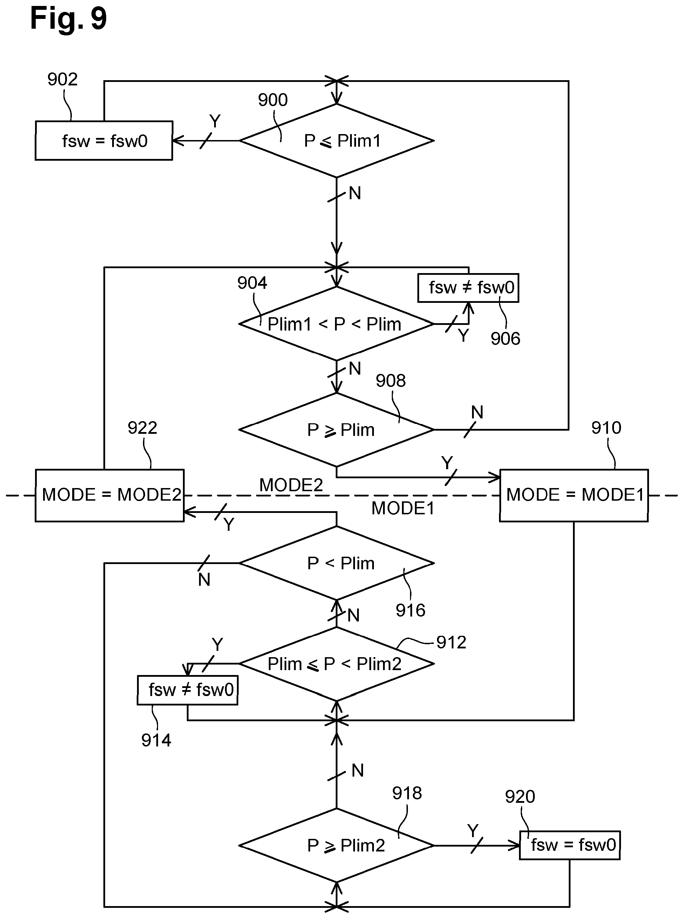

Toutefois, en pratique, des temps morts de commutation sont prévus. La détermination de la valeur ou durée de chacun des temps morts de commutation est à la portée de la personne du métier, par exemple à partir de la description de figure 9 du brevet et des demandes de brevet susmentionnés.

Or, dans le modèle de convertisseur déterminé ci-dessus par les équations [Math 3] et [Math 4], ces temps morts de commutation ne sont pas pris en compte et entraînent que la commutation en zéro de tension (ZVS de l'anglais "Zero Voltage Switching") est perdue lors une commutation entre les premier et deuxième modes de fonctionnement mise en œuvre pour x égal 0, à la valeur nominale de fréquence de découpage.

Il est ainsi proposé, dans un convertisseur à découpage du type de celui de la figure 1, c'est-à-dire comprenant deux ponts en H reliés par un transformateur, et commandé selon les premier et deuxième modes décrits précédemment, de commuter entre le premier mode de fonctionnement à la valeur nominale de la fréquence de découpage et le deuxième mode de fonctionnement à la valeur nominale de la fréquence de découpage en tenant compte des temps morts, par exemple de sorte à maintenir un fonctionnement ZVS lors du passage de l'un à l'autre de ces deux modes de fonctionnement, par exemple en assurant une marge ZVS.

Pour cela, il est prévu que la valeur de la fréquence de découpage soit adaptée lors du passage de l'un à l'autre de ces deux modes de fonctionnement, sur la base d'une durée D égale à la durée des temps morts de commutation ou égale au produit de la durée des temps morts et d'une marge de commutation en tension nulle, ou marge ZVS. Dit autrement, le convertisseur est commandé selon l'un des deux modes de fonctionnement et à la valeur nominale de la fréquence de découpage avant la commutation entre les deux modes de fonctionnement, le convertisseur est commandé selon l'autre des deux modes de fonctionnement et à la valeur nominale de la fréquence de découpage après la commutation entre les deux modes de fonctionnement, et la valeur de la fréquence de découpage est adaptée lors de la commutation entre les deux modes de fonctionnement sur la base de la durée des temps morts ou sur la base de la durée des temps morts et d'une marge ZVS.

La figure 7 représente, de manière schématique et sous forme de blocs, un mode de réalisation de l'adaptation de la valeur de la fréquence de découpage fsw lors d'une transition entre les deux modes de fonctionnement décrits précédemment.

A une étape 700, (bloc "CALCULATE Plim1 FOR MODE 2 AT fsw0 WITH D AND Plim2 FOR MODE 1 AT fsw0 WITH D"), la valeur limite Plim1 de la puissance modélisée P pour laquelle la commutation en zéro de tension est perdue à la valeur nominale fsw0 de la fréquence de découpage fsw est calculée pour le deuxième mode de fonctionnement. En outre, la valeur limite Plim2 de la puissance modélisée P pour laquelle la commutation en zéro de tension est perdue à la valeur nominale fsw0 de la fréquence de découpage fsw est calculée pour le premier mode de fonctionnement. A cette étape, une durée D, par exemple égale à la durée des temps morts, est prise en compte. Dit autrement, à cette étape, les temps morts de commutation sont pris en compte.

Pour une valeur donnée de la fréquence de découpage fsw et en tenant compte de la durée D des temps morts, la valeur limite xlim du paramètre x pour laquelle la commutation en zéro de tension est perdue dans chacun des deux modes de fonctionnement est égale au produit de la durée D par la fréquence de découpage fsw. Dit autrement : [Math 5] $xlim = D . fsw$

Dit encore autrement cela signifie que la durée xlim/fsw que représente le paramètre x est alors égale à la durée D.

Ainsi, dans chacun des premier et deuxième modes de fonctionnement, à la valeur fsw0 de la fréquence fsw, les commutation en zéro de tension sont perdues si x est inférieur à xlim = D.fsw0.

A titre d'exemple, lorsque le convertisseur fonctionne en convertisseur élévateur et que la puissance transmise du pont 110 vers le pont 120 est positive, la puissance Plim1 dans le deuxième mode de fonctionnement, s'obtient en mettant le paramètre x à la valeur xlim1 = D*fsw0 dans le modèle du deuxième mode de fonctionnement du convertisseur, c'est à dire ici dans l'équation [Math 4]. Dit autrement : [Math 6] $Plim 1 = \frac{{V 1}^{2}}{4 . fsw 0 . L} \left(1-2.xlim1\right) \left(1-m\left(1-2.xlim1\right)-4.xlim1\right)$

A titre d'exemple, lorsque le convertisseur fonctionne en convertisseur élévateur et que la puissance transmise du pont 110 vers le pont 120 est positive, la puissance Plim2 dans le premier mode de fonctionnement, s'obtient en mettant le paramètre x à la valeur xlim2 = D*fsw0 dans le modèle du premier mode de fonctionnement du convertisseur, c'est à dire ici dans l'équation [Math 3]. Dit autrement : [Math 7] $Plim 2 = \frac{{V 1}^{2}}{4 . m . fsw 0 . L} \left(\left(-4-4.{m}^{2}\right).{xlim 2}^{2}+\left(4.{m}^{2}-2.m+2\right).xlim2+m-{m}^{2}\right)$

La valeur du paramètre m, la valeur nominale fsw0 de la fréquence de découpage fsw, la durée D, la valeur V1 et la valeur L de l'inductance de fuite étant connues, il est donc possible de calculer les valeurs de puissance limite Plim1 et Plim2.

A une étape 702 (bloc "CALCULATE Plim FOR MODE 1 and MODE 2 WITH D=0"), la valeur limite Plim de la puissance modélisée P que le convertisseur est capable de fournir pour chacun des premier et deuxième modes à la valeur nominale fsw0 de la fréquence de découpage et pour une valeur nulle du paramètre x est calculée. Dit autrement, la puissance Plim est une puissance limite transférable à la fréquence fsw0 dans un cas idéal sans temps morts. A titre d'exemple, l'étape 702 est mise en œuvre après l'étape 700, bien qu'elle puisse également être mise en œuvre avant ou simultanément à l'étape 700.

A titre d'exemple, lorsque le convertisseur fonctionne en convertisseur élévateur et que la puissance transmise du pont 110 vers le pont 120 est positive, la puissance Plim s'obtient en mettant le paramètre x à une valeur nulle dans le modèle du premier ou du deuxième mode de fonctionnement du convertisseur, c'est à dire ici dans l'équation [Math 3] ou [Math 4]. Dit autrement : [Math 8] $Plim = \frac{{V 1}^{2}}{4 . m . fsw 0 . L} \left(m-{m}^{2}\right) = \frac{V {1}^{2}}{4 . fsw 0 . L} \left(1-m\right)$

A une étape 704 (bloc "CALCULATE fsw1 for MODE 2 AT Plim WITH D AND fsw2 FOR MODE 1 AT Plim WITH D"), une valeur fsw1 de la fréquence de découpage fsw est calculée. La valeur fsw1 est la valeur de la fréquence fsw permettant, dans le deuxième mode de fonctionnement et lorsque le paramètre x est égal à xlim, de transférer la puissance Plim calculée à l'étape 702. De manière similaire, à cette étape 704, une valeur fsw2 de la fréquence de découpage fsw est calculée. La valeur fsw2 est la valeur de la fréquence fsw permettant, dans le premier mode de fonctionnement et lorsque le paramètre x est égal à xlim, de transférer la puissance Plim calculée à l'étape 702.

Dans une solution approchée, on considère qu'à cette étape 704 la valeur xlim est constante et égale à D fois fsw0. La solution est dite "solution approchée" car, en pratique, pour une fréquence fsw donnée, la valeur limite xlim pour laquelle la commutation en zéro de tension est perdue est égale à D.fsw. Or, lors de la transition entre les deux modes de fonctionnement, la valeur de la fréquence fsw varie et ne reste pas égale à la valeur nominale fsw0, ce qui entraine une variation de la valeur xlim. Dans la solution approchée on considère malgré tout que, pendant l'adaptation en fréquence lors de la transition entre les deux modes de fonctionnement, la valeur xlim est constante et égale à D fois fsw0.

A titre d'exemple, pour la solution approchée, lorsque le convertisseur fonctionne en convertisseur élévateur et que la puissance transmise du pont 110 vers le pont 120 est positive, la valeur fsw1 de fréquence pour le deuxième mode de fonctionnement s'obtient en mettant, dans le modèle du deuxième mode de fonctionnement du convertisseur, c'est à dire ici dans l'équation [Math 4], le paramètre x à la valeur xlim1 = D.fsw0 et la puissance P à la valeur Plim. Dit autrement : [Math 9] $fsw 1 = \frac{{V 1}^{2}}{4 . Plim . L} \left(1-2.xlim1\right) \left(1-m\left(1-2.xlim1\right)-4.xlim1\right)$

A titre d'exemple, pour la solution approchée, lorsque le convertisseur fonctionne en convertisseur élévateur et que la puissance transmise du pont 110 vers le pont 120 est positive, la valeur fsw2 de fréquence pour le premier mode de fonctionnement s'obtient en mettant, dans le modèle du premier mode de fonctionnement du convertisseur, c'est à dire ici dans l'équation [Math 3], le paramètre x à la valeur xlim2 = D.fsw0 et la puissance P à la valeur Plim. Dit autrement : [Math 10] $fsw 2 = \frac{{V 1}^{2}}{4 . m . Plim . L} \left(\left(-4-4.{m}^{2}\right).{xlim 2}^{2}+\left(4.{m}^{2}-2.m+2\right).xlim2+m-{m}^{2}\right)$

Dans une solution exacte, entre les puissances Plim1 et Plim2, c'est à dire lors de la transition entre les deux modes de fonctionnement pendant laquelle la fréquence est adaptée, on considère que la valeur xlim n'est pas constante et égale à D fois fsw0, mais au contraire qu'elle varie avec la fréquence selon la relation xlim = D.fsw.

Ainsi, dans la solution exacte, calculer la fréquence fsw1 pour laquelle le deuxième mode de fonctionnement permet de transférer Plim avec x égal à xlim1, c'est à dire à D fois fsw1, revient à calculer, avec le modèle de puissance transférable P du deuxième mode de fonctionnement, quelle est la valeur xlim1 du paramètre x permettant de transférer la puissance Plim calculée à l'étape 702, puis à en déduire la valeur fsw1 de fréquence fsw sur la base de la relation fsw1 = xlim1/D. De manière similaire, dans la solution exacte, calculer la fréquence fsw2 pour laquelle le premier mode de fonctionnement permet de transférer Plim avec x égal à xlim2, c'est à dire à D fois fsw2, revient à calculer, avec le modèle de puissance transférable P du premier mode de fonctionnement, quelle est la valeur xlim2 du paramètre x permettant de transférer la puissance Plim calculée à l'étape 702, puis à en déduire la valeur fsw2 de fréquence de découpage fsw sur la base de la relation fsw2 = xlim2/D.

A titre d'exemple, pour la solution exacte, lorsque le convertisseur fonctionne en convertisseur élévateur et que la puissance transmise du pont 110 vers le pont 120 est positive, la valeur xlim1 permettant de transférer la puissance Plim dans le deuxième mode sans perdre les commutations en zéro de tension s'obtient en résolvant une équation du second degré dont xlim1 = fsw1.D est l'inconnue. Cette équation du second degré est obtenue à partir du modèle du convertisseur pour le deuxième mode de fonctionnement, c'est à dire l'équation [Math 4], en fixant dans ce modèle la puissance P à la valeur Plim et en remplaçant fsw par fsw1, c'est à dire par xlim1/D. Cela revient à résoudre l'équation du second degré suivante : [Math 11] $0 = \left(-4.m+8\right) . {xlim 1}^{2} + \left(4.m-6-\frac{4 . Plim . L}{D . V {1}^{2}}\right) . xlim 1 + \left(1-m\right)$

En posant : $alim 1 = \left(-4.m+8\right) ,$ $blim 1 = \left(4.m-6-\left(4.Plim.L\right)/\left(D{. V 1}^{2}\right)\right) ,$ et $clim 1 = \left(1-m\right) ,$on obtient : [Math 12] $xlim 1 = \frac{- blim 1 - \sqrt{4 . alim 1 . clim 1}}{2 . alim 1}$

On obtient alors fsw1 = xlim1/D.

Toujours à titre d'exemple, pour la solution exacte, lorsque le convertisseur fonctionne en convertisseur élévateur et que la puissance transmise du pont 110 vers le pont 120 est positive la valeur xlim2 permettant de transférer la puissance Plim dans le premier mode de fonctionnement sans perdre les commutations en zéro de tension s'obtient en résolvant une équation du second degré dont xlim2 est l'inconnue. Cette équation du second degré est obtenue à partir du modèle du convertisseur pour le premier mode de fonctionnement, c'est à dire l'équation [Math 3], en fixant dans ce modèle la puissance P à la valeur Plim et en remplaçant fsw par fsw2, c'est à dire par xlim2/D. Ainsi, cela revient à résoudre l'équation du second degré suivante : [Math 13] $0 = \left(-4.{m}^{2}-4\right) . xlim {2}^{2} + \left(4.{m}^{2}-2.m-\frac{4 . m . Plim . L}{D . V {1}^{2}}\right) . xlim 2 + \left(m-{m}^{2}\right)$

En posant : $alim 2 = \left(-4.{m}^{2}-4\right) ,$ $blim 2 = \left(4.{m}^{2}-2.m-\left(4.m.Plim.L\right)/\left(D{. V 1}^{2}\right)\right) ,$ et $clim 2 = \left(m-{m}^{2}\right) ,$on obtient : [Math 14] $xlim 2 = \frac{- blim 2 - \sqrt{4 . alim 2 . clim 2}}{2 . alim 2}$

On obtient alors fsw2 = xlim2/D.

A titre d'exemple, les étapes 700, 702 et 704 sont mises en œuvre à l'étape 220 de la figure 2.

A titre d'exemple, les étapes 700, 702 et 704 sont mises en œuvre par un circuit de traitement du convertisseur, par exemple par le circuit de traitement 180 (figure 1) du convertisseur 100, par exemple par l'unité de traitement de ce circuit 180, par exemple adaptant le programme stocké dans la mémoire du circuit 180.

La figure 8 représente, de manière schématique et par des courbes, un mode de réalisation d'encore une autre étape de commande du convertisseur de la figure 1. Plus particulièrement, la figure 8 illustre l'évolution de la fréquence fsw en fonction de la puissance transférable P lors d'une transition entre le premier mode de fonctionnement (MODE 1 en figure 8) à la valeur nominale fsw0 de la fréquence fsw et le deuxième mode de fonctionnement (MODE 2 en figure 8) à la valeur nominale fsw0 de la fréquence fsw. Dit autrement, la figure 8 illustre une étape de commande du convertisseur selon un mode de réalisation où la fréquence fsw est adaptée lors d'une transition entre les deux modes de fonctionnement, sur la base de la durée D.

Comme cela se voit sur la figure 8, à la valeur nominale fsw0 de la fréquence fsw, lorsque la puissance transférable P est inférieure à la puissance Plim1 calculée à l'étape 700 (figure 7), le convertisseur est commandé selon le deuxième mode de fonctionnement, MODE 2. Dans cette première région, la valeur du paramètre x et les instants ti correspondant sont par exemple calculés à l'étape 220 (figure 2), puis les signaux de commande correspondants sont par exemple appliqués aux interrupteurs des ponts à l'étape 230 (figure 2).

Dans cette première région de fonctionnement, le paramètre x est calculé de la manière indiquée précédemment en relation avec l'étape 220 (figure 2), sur la base d'une égalité entre la consigne de puissance P* et la puissance modélisée transférable P, cette dernière étant par exemple déterminée par l'équation [Math 4] dans un modèle donné du convertisseur.

Par exemple, à chaque variation de la consigne de puissance P*, tant que la consigne P* reste inférieure à la valeur Plim1, le paramètre x est recalculé pour respecter l'égalité P* = P, et les instants ti de commutation sont déduits ou calculés à partir de la valeur recalculée du paramètre x.

Lorsque, dans le deuxième mode MODE 2, la fréquence fsw est à sa valeur nominale et que la consigne P*, donc la puissance P, atteint la valeur limite Plim1, le paramètre x est alors égal à xlim1 = D.fsw0. A partir de la puissance Plim1, la valeur de la fréquence fsw est adaptée et n'est plus maintenue constante et égale à fsw0.

Plus particulièrement, dans le mode MODE 2, dans une deuxième région de fonctionnement où la puissance P est comprise entre Plim1 et Plim, la valeur de la fréquence fsw est comprise entre fsw0 et fsw1. Par exemple, dans cette deuxième région, la valeur de la fréquence fsw décroit lorsque la puissance P augmente.

Dans cette deuxième région, la valeur du paramètre x, la valeur de la fréquence fsw et les instants ti correspondant sont par exemple calculés à l'étape 220 (figure 2), puis les signaux de commande correspondants sont par exemple appliqués aux interrupteurs des ponts à l'étape 230 (figure 2) à la fréquence fsw. En particulier, dans cette deuxième région, la valeur du paramètre x est égale à D.fsw0 (solution approchée) ou à D.fsw (solution exacte).

Par exemple, dans le mode MODE 2, pour une consigne P* (donc une puissance modélisée P) égale à une valeur P1 comprise entre Plim1 et Plim, la valeur f1 correspondante de la fréquence fsw est calculée en utilisant le modèle du deuxième mode, et en fixant le paramètre x à la valeur x1 égale à fsw0.D (solution approchée) ou à f1.D (solution exacte) .

A titre d'exemple, pour la solution approchée, lorsque le convertisseur fonctionne en convertisseur élévateur et que la puissance transmise du pont 110 vers le pont 120 est positive, la valeur f1 de fréquence fsw pour le deuxième mode de fonctionnement s'obtient en mettant, dans le modèle du deuxième mode de fonctionnement du convertisseur, c'est à dire ici dans l'équation [Math 4], le paramètre x à la valeur x1 = D.fsw0 = xlim1 et la puissance P à la valeur P1. Dit autrement, cela revient à résoudre l'équation suivante : [Math 15] $f 1 = \frac{{V 1}^{2}}{4 . P 1 . L} \left(1-2.x1\right) \left(1-m\left(1-2.x1\right)-4.x1\right)$

A titre d'exemple, pour la solution exacte, lorsque le convertisseur fonctionne en convertisseur élévateur et que la puissance transmise du pont 110 vers le pont 120 est positive, la valeur x1 permettant de transférer la puissance P1 dans le deuxième mode et sans perdre les commutations en zéro de tension s'obtient en résolvant une équation du second degré dont x1 est l'inconnue. Cette équation du second degré est obtenue à partir du modèle du convertisseur pour le deuxième mode de fonctionnement, c'est à dire l'équation [Math 4], en fixant dans ce modèle la puissance P à la valeur P1 et en remplaçant fsw par f1, c'est à dire par x1/D. Cela revient à résoudre l'équation du second degré suivante : [Math 16] $0 = \left(-4.m+8\right) . {x 1}^{2} + \left(4.m-6-\frac{4 . Plim . L}{D . V {1}^{2}}\right) . x 1 + \left(1-m\right)$

En posant : $a 1 = \left(-4.m+8\right) ,$ $b 1 = \left(4.m-6-\left(4.P1.L\right)/\left(D{. V 1}^{2}\right)\right) ,$ et $c 1 = \left(1-m\right) ,$on obtient : [Math 17] $x 1 = \frac{- b 1 - \sqrt{4 . a 1 . c 1}}{2 . a 1}$

On obtient alors f1 = x1/D.

Lorsque, dans le deuxième mode MODE 2, la consigne P*, donc la puissance P, atteint la valeur limite Plim, le paramètre x est alors égal à D.fsw0 (solution approchée) ou à D*fsw1 (solution exacte), et la fréquence fsw est à la valeur fsw1.

A ce moment, le mode de commande ou de fonctionnement du convertisseur commute du deuxième mode, MODE 2, au premier mode, MODE 1. Pour cela, la valeur de fréquence fsw commute de la valeur fsw1 à la valeur fsw2. Dit autrement, la commutation du mode MODE 2 vers le MODE 1 comprend un saut de la fréquence fsw de sa valeur fsw1 à sa valeur fsw2. En pratique, la valeur fsw2 est supérieure à la valeur fsw1.

Dans le mode MODE 1, dans une troisième région de fonctionnement où la puissance P est comprise entre Plim et Plim2, la valeur de la fréquence fsw est comprise entre fsw2 et fsw0. Par exemple, dans cette troisième région, la valeur de la fréquence fsw décroit lorsque la puissance P augmente.

Dans cette troisième région, la valeur du paramètre x, la valeur de la fréquence fsw et les instants ti correspondant sont par exemple calculés à l'étape 220 (figure 2), puis les signaux de commande correspondants sont par exemple appliqués aux interrupteurs des ponts à l'étape 230 (figure 2) à la fréquence fsw. En particulier, dans cette troisième région, la valeur du paramètre x est égale à D.fsw0 (solution approchée) ou à D.fsw (solution exacte).

Par exemple, dans le mode MODE 1, pour une consigne P* (donc une puissance modélisée P) égale à une valeur P2 comprise entre Plim et Plim2, la valeur f2 correspondante de la fréquence fsw est calculée en utilisant le modèle du premier mode, et en fixant le paramètre x à la valeur x2 égale à fsw0.D (solution approchée) ou à f2.D (solution exacte).

A titre d'exemple, pour la solution approchée, lorsque le convertisseur fonctionne en convertisseur élévateur et que la puissance transmise du pont 110 vers le pont 120 est positive, la valeur f2 de fréquence fsw pour le premier mode de fonctionnement s'obtient en mettant, dans le modèle du premier mode de fonctionnement du convertisseur, c'est à dire ici dans l'équation [Math 3], le paramètre x à la valeur x2 = D.fsw0 = xlim2 et la puissance P à la valeur P2. Dit autrement, cela revient à résoudre l'équation suivante : [Math 18] $f 2 = \frac{{V 1}^{2}}{4 . m . P 2 . L} \left(\left(-4-4.{m}^{2}\right).{x 2}^{2}+\left(4{. m}^{2}-2.m+2\right).x2+m-{m}^{2}\right)$

A titre d'exemple, pour la solution exacte, lorsque le convertisseur fonctionne en convertisseur élévateur et que la puissance transmise du pont 110 vers le pont 120 est positive, la valeur x2 permettant de transférer la puissance P2 dans le premier mode et sans perdre les commutations en zéro de tension s'obtient en résolvant une équation du second degré dont x2 est l'inconnue. Cette équation du second degré est obtenue à partir du modèle du convertisseur pour le deuxième mode de fonctionnement, c'est à dire l'équation [Math 4], en fixant dans ce modèle la puissance P à la valeur P2 et en remplaçant fsw par f2, c'est à dire par x2/D. Cela revient à résoudre l'équation du second degré suivante : [Math 19] $0 = \left(-4.{m}^{2}-4\right) . {x 2}^{2} + \left(4.{m}^{2}-2.m+2-\frac{4 . m . P 2 . L}{D . V {1}^{2}}\right) . x 2 + \left(m-{m}^{2}\right)$

En posant : $a 2 = \left(-4.{m}^{2}-4\right) ,$ $b 2 = \left(4.{m}^{2}-2.m+2-\left(4.m.P2.L\right)/\left(D{. V 1}^{2}\right)\right) ,$ et $c 2 = \left(m-{m}^{2}\right) ,$on obtient : [Math 20] $x 2 = \frac{- b 2 - \sqrt{4 . a 2 . c 2}}{2 . a 2}$

On obtient alors f2 = x2/D.

Lorsque, dans le mode MODE 1, la consigne P*, donc la puissance P, atteint la valeur limite Plim2, le paramètre x est alors égal à xlim2 = D.fsw0, et la fréquence fsw est à sa valeur fsw0. Dans une quatrième région de fonctionnement où la puissance P est supérieure à Plim2, la valeur de la fréquence fsw n'est plus adaptée et est maintenue constante et égale à fsw0.

Une transition du mode MODE 2 vers le mode MODE 1 a été décrite ci-dessus en relation avec la figure 8. En particulier, lors de cette transition, la commutation du mode MODE 2 au mode MODE 1 lorsque la puissance P est égale à Plim comprend un saut de la fréquence fsw de la valeur fsw1 à la valeur fsw2. La personne du métier est en mesure de déduire de cette description, par symétrie de fonctionnement, la description d'une transition du mode MODE 1 vers le mode MODE 2, par exemple suite à une diminution de la consigne de puissance P*. En particulier, lors d'une transition du mode MODE 1 vers le mode MODE 2, la commutation du mode MODE 1 au mode MODE 2 lorsque la puissance P est égale à Plim comprend un saut de la fréquence fsw de la valeur fsw2 à la valeur fsw1.

La figure 9 représente, de manière schématique et sous forme de blocs, un mode de réalisation de l'étape de commande de la figure 8.

A une étape 900 (bloc "P ≤ Plim1"), il est vérifié si la consigne en puissance P* (donc la puissance P) est inférieure à la valeur Plim1.

Si c'est le cas (sortie Y du bloc 900), le convertisseur se trouve dans la première région de fonctionnement et le convertisseur est commandé selon le mode MODE 2. En outre, le procédé se poursuit à une étape 902 (bloc "fsw = fsw0") où la fréquence fsw est fixée à sa valeur nominale fsw0, puis le procédé reboucle sur l'étape 900. Dans la première région, le paramètre x et les instants ti sont, par exemple, calculés de la manière indiquée en relation avec la figure 8.

Si ce n'est pas le cas (sortie N du bloc 900), le procédé se poursuit à une étape 904 (bloc "Plim1 < P < Plim") suivante.

A l'étape 904, il est vérifié si la consigne en puissance P* (donc la puissance P) est comprise entre Plim1 et Plim.

Si c'est le cas (sortie Y du bloc 904), cela signifie que le convertisseur est dans la deuxième région de fonctionnement décrite précédemment et est donc commandé selon le mode MODE 2. Le procédé se poursuit alors à une étape 906 (bloc "fsw ≠ fsw0") où la fréquence fsw n'est plus maintenue constante et égale à sa valeur nominale fsw0, mais est adaptée sur la base de la durée D, c'est à dire en tenant compte de la durée des temps morts. Dans cette deuxième région, le paramètre x et les instants ti sont, par exemple, calculés de la manière indiquée en relation avec la figure 8. L'étape 906 est suivie de l'étape 904.

Si ce n'est pas le cas (sortie N du bloc 904), le procédé se poursuit à une étape 908 (bloc " P ≥ Plim").

A l'étape 908, il est vérifié si la consigne en puissance P* (donc la puissance P), est supérieure ou égale à Plim.

Si ce n'est pas le cas (sortie N du bloc 908), du fait que l'étape 908 suit l'étape 904, cela signifie que la puissance P n'est ni comprise entre Plim1 et Plim, ni supérieure à Plim, et donc la puissance P est inférieure à Plim1 et le convertisseur est dans la première région de fonctionnement. Le procédé se poursuit alors à l'étape 900 comme cela est illustré en figure 9, ou, en variante, à l'étape 902.

Si c'est le cas (sortie Y du bloc 908), le procédé se poursuit une étape 910 (bloc "MODE = MODE 1") lors de laquelle le convertisseur bascule du mode de fonctionnement MODE 2 au mode de fonctionnement MODE 1 comme cela est illustré par des traits en pointillés en figure 9. L'étape 910 est suivie d'une étape 912 (bloc "Plim ≤ P < Plim2") comme cela est représenté en figure 9 ou, en variante, d'une étape 918 (bloc "P ≥ Plim2).

A l'étape 912, il est vérifié si la consigne en puissance P* (donc la puissance P) est comprise entre Plim et Plim2.

Si c'est le cas (sortie Y du bloc 912), cela signifie que le convertisseur est dans la troisième région de fonctionnement décrite précédemment et est donc commandé selon le mode MODE 1. Le procédé se poursuit alors à une étape 9914 (bloc "fsw ≠ fsw0") où la fréquence fsw n'est plus maintenue constante et égale à sa valeur nominale fsw0, mais est adaptée sur la base de la durée D, c'est à dire en tenant compte de la durée des temps morts. Dans cette troisième région, le paramètre x et les instants ti sont, par exemple, calculés de la manière décrite en relation avec la figure 8. L'étape 914 est suivie de l'étape 912.

Si ce n'est pas le cas (sortie N du bloc 912), le procédé se poursuit à une étape 916 (bloc "P < Plim").

A l'étape 916, il est vérifié si la consigne en puissance P* (donc la puissance P), est inférieure à Plim.

Si ce n'est pas le cas (sortie N du bloc 916), du fait que l'étape 916 suit l'étape 912, cela signifie que la puissance P n'est ni comprise entre Plim et Plim2, ni inférieure à Plim, et donc que la puissance P est supérieure à Plim2 et le convertisseur est dans la quatrième région de fonctionnement. Le procédé se poursuit alors à l'étape 918 comme cela est illustré en figure 9, ou, en variante, à une étape 920 (bloc "fsw = fsw0").

Si c'est le cas (sortie Y du bloc 916), le procédé se poursuit une étape 922 (bloc "MODE = MODE 2") lors de laquelle le convertisseur bascule du mode de fonctionnement MODE 1 au mode de fonctionnement MODE 2 comme cela est illustré par les traits en pointillés en figure 9. L'étape 922 est suivie de l'étape 904 comme cela est représenté en figure 9, ou, en variante, de l'étape 900.

A l'étape 918, il est vérifié si la consigne en puissance P* (donc la puissance P) est supérieure ou égale à la valeur Plim2.

Si c'est le cas (sortie Y du bloc 918), le convertisseur se trouve dans la quatrième région de fonctionnement et le convertisseur est commandé selon le mode MODE 1. En outre, le procédé se poursuit à l'étape 920 où la fréquence fsw est fixée à sa valeur nominale fsw0, puis le procédé reboucle sur l'étape 920. Dans la quatrième région, le paramètre x et les instants ti sont, par exemple, calculés de la manière indiquée en relation avec la figure 8.

Si ce n'est pas le cas (sortie N du bloc 918), le procédé se poursuit à l'étape 912.

Dans l'exemple ci-dessus, on a fait l'hypothèse que lorsque la puissance P est égale à Plim, le convertisseur est commandé selon le mode MODE 1. La personne du métier sera en mesure d'adapté le procédé ci-dessus à des exemples où, lorsque la puissance P est égale à Plim, le convertisseur est commandé selon le mode MODE 2. Plus généralement, la personne du métier sera en mesure de modifier l'exemple ci-dessus en remplaçant des inégalités strictes par des inégalités simples (couvrant le cas égal) et inversement.

On a décrit précédemment, en relation avec les figures 7 à 9, une solution approchée dans laquelle, pour calculer Plim, la fréquence fsw lorsque la puissance P est comprise entre Plim1 et Plim, et la fréquence fsw lorsque la puissance P est comprise entre Plim et Plim2, le paramètre x est considéré constant et égal à D.fsw0. Lorsque la durée D est égale à la durée des temps morts et que la puissance P est comprise entre Plim1 et Plim, cela revient à sur-estimer la valeur xlim = D.fsw du fait que la fréquence fsw est alors comprise entre fsw0 et fsw1, et est donc inférieure à fsw0. En revanche, lorsque la durée D est égale à la durée des temps morts et que la puissance P est comprise entre Plim et Plim2, cela revient à sous-estimer la valeur xlim = D.fsw du fait que la fréquence fsw est alors comprise entre fsw2 et fsw0, et est donc supérieure à fsw0.

Ainsi, au moins avec la solution approchée, au lieu d'utiliser une durée D égale à la durée des temps morts il est préférable d'utiliser une durée D égale au produit de la durée des temps morts par une marge ZVS, notée A et strictement supérieure à 1, par exemple comprise entre 1,1 et 1,5, par exemple égale à 1,1. Cela est plus particulièrement vrai pour le calcul de la puissance Plim2, de la fréquence fsw2 et pour le calcul de la valeur de la fréquence fsw lorsque la puissance P est comprise entre Plim et Plim2.

Dans la description faite ci-dessus en relation avec les figures 5 à 9, le convertisseur fonctionne en mode élévateur, c'est à dire que la tension V1 est inférieure à une tension n.V2 (m<1), et la puissance transférée du pont 110 vers le pont 120 est positive. La personne du métier est en mesure d'adapter la description faite en relation avec les figures 5 à 9 à des cas où le convertisseur fonctionne en mode abaisseur ("buck" en anglais), c'est à dire que la tension V1 est supérieure à la tension n.V2 (m>1), et où la puissance transférée du pont 110 au pont 120 est positive. Pour cela, la personne du métier peut par exemple se baser sur le brevet FR et les demandes de brevets EP et US mentionnés précédemment ou, à titre d'exemple alternatif, procéder aux changements de variables suivants dans les calculs décrits précédemment :
la tension V1 décrite en relation avec un fonctionnement élévateur est remplacée par une tension n.V2 dans un fonctionnement abaisseur, avec V2 la tension aux bornes du pont 120 en mode abaisseur, et
la tension V2 décrite en relation avec un fonctionnement élévateur est remplacée par une tension V1/n dans un fonctionnement abaisseur, avec V1 la tension aux bornes du pont 110 en mode abaisseur.

Par ailleurs, que le convertisseur fonctionne en mode abaisseur ou en mode élévateur, il a été considéré jusqu'ici que la puissance transférée du pont 110 au pont 120 est positive. Toutefois, la personne du métier est en mesure d'adapter la description ci-dessus au cas où la puissance transférée du pont 110 au pont 120 est négative, soit du fait que les calculs avec une puissance négative sont similaires, soit en considérant que la puissance transférée est toujours positive jusqu'au calcul du déphasage, ou écart de phase, dϕ entre les séquences SA et SB, et en choisissant le signe de la puissance transférée au moment du calcul de ce déphasage.

Un exemple particulier de modèle du convertisseur a été décrit précédemment, ce modèle étant déterminé par les équations [Math 3] pour le mode MODE 1 et [Math 4] pour le mode MODE 2. La personne du métier est en mesure, à partir de cet exemple, d'adapter les étapes de calcul décrites ci-dessus à d'autres modèles du convertisseur, par exemple prenant en compte des résistances ce qui conduirait à un modèle déterminé par des équations différentes des équations [Math 3] et [Math 4].

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé de commande d'un convertisseur (100) comprenant deux ponts en H (110, 120) reliés par un transformateur (130), chacun des deux ponts comprenant deux branches en parallèle entre deux bornes du pont, chaque branche comprenant deux interrupteurs en série, dans lequel :
- des répétitions, à une fréquence de répétition (fsw), de deux séquences (SA, SB) de commutations entre plusieurs états (P, O, N) sont appliquées respectivement aux deux ponts ;
- une première (SB) des deux séquences est appliquée à un premier des deux ponts et lesdits plusieurs états de la première séquence comprennent un premier état (N) dans lequel deux interrupteurs du premier pont disposés d'un côté d'une première des deux bornes du premier pont sont respectivement passant et bloqué, un deuxième état (P) dans lequel lesdits deux interrupteurs du premier pont sont respectivement bloqué et passant, et un troisième état (O) dans lequel deux interrupteurs du premier pont disposés du côté d'une même borne parmi les deux bornes du premier pont sont bloqués et les deux autres interrupteurs du premier pont sont passants ;
- une deuxième (SA) des deux séquences est appliquée à un deuxième des deux ponts et lesdits plusieurs états de la deuxième séquence comprennent un premier état (N) dans lequel deux interrupteurs du deuxième pont disposés d'un côté d'une première des deux bornes du deuxième pont sont respectivement passant et bloqué, et un deuxième état (P) dans lequel lesdits deux interrupteurs du deuxième pont sont respectivement bloqué et passant ;
- une tension est appliquée au transformateur par le premier pont dans un sens donné au premier état (N) de la première séquence (SB), et dans un sens opposé au sens donné au deuxième état (P) de la première séquence (SB) ;
- dans un premier mode de commande (MODE 1), des commutations d'entrée et sortie d'un état donné de la première séquence (SB) parmi les premier et deuxième états de la première séquence (SB) se produisent à des états différents de la deuxième séquence (SA) ;
- dans un deuxième mode de commande (MODE 2), des commutations d'entrée et sortie d'un état donné de la première séquence (SB) parmi les premier et deuxième états (N, P) de la première séquence (SB) se produisent à un même état de la deuxième séquence (SA) ; et
le procédé étant **caractérisé en ce que**:
- chaque transition entre le premier mode (MODE 1) à une valeur nominale (fsw0) de fréquence de répétition (fsw) et le deuxième mode (MODE 2) à la valeur nominale (fsw0) de la fréquence de répétition (fsw) comprend une adaptation de la fréquence de répétition (fsw) déterminée par une première durée (D) égale à une durée de temps mort de commutation ou au produit de la durée de temps mort de commutation et d'une marge de commutation en tension nulle.

2. Procédé selon la revendication 1, dans lequel chaque transition comprend, sur la base d'un modèle du convertisseur (100) :
- le calcul (700) d'une première puissance transférable (Plim2) entre les deux ponts (110, 120) avec le premier mode (MODE 1) et la valeur nominale (fsw0) de la fréquence de répétition (fsw), la première puissance (Plim2) étant déterminée par la première durée (D) ;
- le calcul (700) d'une deuxième puissance transférable (Plim1) entre les deux ponts (110, 120) avec le deuxième mode (MODE 2) et la valeur nominale de la fréquence de répétition (fsw), la deuxième puissance (Plim1) étant déterminée par la première durée (D) ;
- le calcul (702) d'une troisième puissance transférable (Plim) entre les deux ponts (110, 120) dans les premier et deuxième modes (MODE 1, MODE 2) à la valeur nominale (fsw0) de la fréquence de répétition (fsw) et sans prendre en compte la première durée (D) ;
- le calcul (704) d'une première valeur (fsw2) de la fréquence de répétition (fsw) dans le premier mode (MODE 1), la première valeur (fsw2) de la fréquence de répétition étant déterminée par la troisième puissance transférable (Plim) et la première durée (D) ; et
- le calcul (704) d'une deuxième valeur (fsw1) de la fréquence de répétition (fsw) dans le deuxième mode (MODE 2), la deuxième valeur (fsw1) de la fréquence de répétition étant déterminée par la troisième puissance transférable (Plim) et la première durée.

3. Procédé selon la revendication 2, dans lequel :
chaque transition du premier mode (MODE 1) au deuxième mode (MODE 2) comprend un saut de la première valeur (fsw2) à la deuxième valeur (fsw1) de la fréquence de répétition (fsw) ; et
chaque transition du deuxième mode (MODE 2) au premier mode (MODE 1) comprend un saut de la deuxième valeur (fsw1) à la première valeur (fsw2) de la fréquence de répétition (fsw).

4. Procédé selon la revendication 2 ou 3, dans lequel :
chaque transition du premier mode (MODE 1) avec la valeur nominale (fsw0) de la fréquence de répétition (fsw) au deuxième mode (MODE 2) avec la valeur nominale (fsw0) de la fréquence de répétition (fsw) comprend successivement :
- dans le premier mode (MODE 1), passer de la première puissance (Plim2) à la troisième puissance (Plim) en passant de la valeur nominale (fsw0) de la fréquence de répétition (fsw) à la première valeur (fsw2) de la fréquence de répétition (fsw),
- à la troisième puissance (Plim), commuter du premier mode (MODE 1) au deuxième mode (MODE 2) en commutant de la première valeur (fsw2) de la fréquence de répétition (fsw) à la deuxième valeur (fsw1) de fréquence de répétition, et
- dans le deuxième mode (MODE 2), passer de la troisième puissance (Plim) à la deuxième puissance (Plim1) en passant de la deuxième valeur (fsw1) de la fréquence de répétition (fsw) à la valeur nominale (fsw0) de la fréquence de répétition (fsw) ; et
chaque transition du deuxième mode (MODE 2) avec la valeur nominale (fsw0) de la fréquence de répétition (fsw) au premier mode (MODE 1) avec la valeur nominale (fsw0) de la fréquence de répétition (fsw) comprend successivement :
- dans le deuxième mode (MODE 2), passer de la deuxième puissance (Plim1) à la troisième puissance (Plim) en passant de la valeur nominale (fsw0) de la fréquence de répétition à la deuxième valeur (fsw1) de la fréquence de répétition,
- à la troisième puissance (Plim), commuter du deuxième mode (MODE 2) au premier mode (MODE 1) en commutant de la deuxième valeur (fsw1) de la fréquence de répétition (fsw) à la première valeur (fsw2) de la fréquence de répétition (fsw), et
- dans le premier mode (MODE 1), passer de la troisième puissance (Plim) à la première puissance (Plim2) en passant de la première valeur (fsw2) de la fréquence de répétition à la valeur nominale (fsw0) de la fréquence de répétition (fsw).

5. Procédé selon l'une quelconque des revendications 2 à 4, dans lequel :
les commutations entre les états de chacune des première et deuxième séquences ont lieu à des instants (tA1, tA2, tB1, tB2, tB3, tB4) résultant de calculs basés sur une égalité entre :
- une puissance de consigne à transférer entre les ponts (110, 120) par le convertisseur (100) ; et
- une puissance transférable (P) calculée à partir du modèle du convertisseur et à partir de valeurs des tensions (V1, V2) aux bornes des ponts (110, 120).

6. Procédé selon la revendication 5, dans lequel la consigne est calculée en fonction d'une valeur de tension reçue par l'un des ponts (110) et/ou d'une valeur de tension à fournir par l'autre des ponts (120).

7. Procédé selon la revendication 6, dans lequel la consigne est calculée en sorte que le convertisseur ait un fonctionnement de type PFC.

8. Procédé selon l'une quelconque des revendications 5 à 7, dans lequel lesdits calculs sont en outre basés sur une égalité souhaitée entre valeurs (i0) d'un courant (I135) dans le transformateur (130) à l'un des instants de commutation de l'une des deux séquences et à l'un des instants de commutation de l'autre des deux séquences.

9. Procédé selon l'une quelconque des revendications 5 à 8, dans lequel :
le modèle comprend un premier paramètre (x) représentatif d'une deuxième durée entre instants de commutation des deux séquences (SA, SB) dans le premier mode (MODE 1) et d'une troisième durée entre instants de commutation des deux séquences (SA, SB) dans le deuxième mode (MODE 2) ;
la première puissance transférable (Plim2) dans le premier mode (MODE 1) est calculée à partir du modèle en utilisant une première valeur du premier paramètre (x) correspondant à une égalité des première et deuxième durées ;
la troisième puissance (Plim) transférable dans les premier et deuxième modes (MODE 1, MODE 2) est calculée à partir du modèle en utilisant une valeur nulle du premier paramètre ; et
la deuxième puissance (Plim1) transférable dans le deuxième mode (MODE 2) est calculée à partir du modèle en utilisant la première valeur du premier paramètre (x) correspondant à une égalité des première et troisième durées.

10. Procédé selon la revendication 9, dans lequel :
dans le premier mode (MODE 1), le modèle est déterminé par l'équation suivante : [Math 21] $P = \frac{V {1}^{2}}{4 . m . fsw . L} \left(\left(-4-4.{m}^{2}\right).{x}^{2}+\left(4.{m}^{2}-2.m+2\right).x+m-{m}^{2}\right)$
où P est la puissance transférable, V1 est une tension aux bornes de l'un des deux ponts, x est le premier paramètre, fsw est la fréquence de répétition, L est une valeur d'une inductance de fuite du convertisseur, et m est un rapport entre un rapport des tensions aux bornes des deux ponts et un rapport de transformation du transformateur ; et
dans le deuxième mode (MODE 2), le modèle est déterminé par l'équation suivante : [Math 22] $P = \frac{V {1}^{2}}{4 . fsw . L} \left(1-2.x\right) \left(1-m.\left(1-2.x\right)-4.x\right) .$

11. Dispositif (180) configuré pour mettre en œuvre un procédé selon l'une quelconque des revendications 1 à 10.

12. Convertisseur (100) comprenant un dispositif selon la revendication 11.

## Patentansprüche

1. Ein Verfahren zum Steuern eines Wandlers (100), der zwei H-Brücken (110, 120) aufweist, die durch einen Transformator (130) gekoppelt sind, wobei jede der zwei Brücken zwei Zweige parallel zwischen zwei Anschlüssen der Brücke aufweist und jeder Zweig zwei Schalter in Reihe aufweist, wobei:
- Wiederholungen mit einer Wiederholfrequenz (fsw) von zwei Sequenzen (SA, SB) von Schaltvorgängen zwischen einer Vielzahl von Zuständen (P, O, N) jeweils auf die zwei Brücken angewendet werden;
- eine erste (SB) der zwei Sequenzen auf eine erste der zwei Brücken angewendet wird, und die Vielzahl von Zuständen der ersten Sequenz einen ersten Zustand (N) aufweist, in dem zwei Schalter der ersten Brücke, die auf einer Seite eines ersten der zwei Anschlüsse der ersten Brücke angeordnet sind, jeweils EIN und AUS sind, einen zweiten Zustand (P) aufweist, in dem die genannten zwei Schalter der ersten Brücke jeweils AUS und EIN sind, und einen dritten Zustand (O), in dem zwei Schalter der ersten Brücke, die auf einer Seite desselben Anschlusses unter den zwei Anschlüssen der ersten Brücke angeordnet sind, AUS sind und die anderen zwei Schalter der ersten Brücke EIN sind;
- eine zweite Sequenz (SA) der zwei Sequenzen auf eine zweite der zwei Brücken angewendet wird, und die Vielzahl von Zuständen der zweiten Sequenz einen ersten Zustand (N) aufweist, in dem zwei Schalter der zweiten Brücke, die auf einer Seite eines ersten der zwei Anschlüsse der zweiten Brücke angeordnet sind, jeweils EIN und AUS sind, und einen zweiten Zustand (P), in dem die genannten zwei Schalter der zweiten Brücke jeweils AUS und EIN sind;
- eine Spannung durch die erste Brücke in einer gegebenen Richtung an den Transformator im ersten Zustand (N) der ersten Sequenz (SB) angelegt wird und in einer der gegebenen Richtung entgegengesetzten Richtung im zweiten Zustand (P) der ersten Sequenz (SB);
- in einem ersten Steuermodus (MODE 1) Schaltvorgänge zum Eintreten in und Verlassen eines gegebenen Zustands der ersten Sequenz (SB) unter dem ersten und dem zweiten Zustand der ersten Sequenz (SB) in unterschiedlichen Zuständen der zweiten Sequenz (SA) auftreten;
- in einem zweiten Steuermodus (MODE 2) Schaltvorgänge zum Eintreten in und Verlassen eines gegebenen Zustands der ersten Sequenz (SB) unter dem ersten und dem zweiten Zustand der ersten Sequenz (SB) in demselben Zustand der zweiten Sequenz (SA) auftreten; und
das Verfahren **dadurch gekennzeichnet, dass**:
- jeder Übergang zwischen dem ersten Modus (MODE 1) bei einem Nennwert (fsw0) der Wiederholfrequenz (fsw) und dem zweiten Modus (MODE 2) bei dem Nennwert (fsw0) der Wiederholfrequenz (fsw) eine Anpassung der Wiederholfrequenz (fsw) aufweist, die durch eine erste Dauer (D) bestimmt wird, die gleich einer Schalt-Totzeitdauer oder dem Produkt der Schalt-Totzeitdauer und einer Nullspannungs-Schaltmarge ist.

2. Das Verfahren nach Anspruch 1, wobei jeder Übergang auf Grundlage eines Modells des Wandlers (100) Folgendes aufweist:
- Berechnen (700) einer ersten Leistung (Plim2), die zwischen den zwei Brücken (110, 120) mit dem ersten Modus (MODE 1) und dem Nennwert (fsw0) der Wiederholfrequenz (fsw) übertragbar ist, wobei die erste Leistung (Plim2) durch die erste Dauer (D) bestimmt wird;
- Berechnen (700) einer zweiten Leistung (Plim1), die zwischen den zwei Brücken (110, 120) mit dem zweiten Modus (MODE 2) und dem Nennwert der Wiederholfrequenz (fsw) übertragbar ist, wobei die zweite Leistung (Plim1) durch die erste Dauer (D) bestimmt wird;
- Berechnen (702) einer dritten Leistung (Plim), die zwischen den zwei Brücken (110, 120) im ersten und im zweiten Modus (MODE 1, MODE 2) bei dem Nennwert (fsw0) der Wiederholfrequenz (fsw) ohne Berücksichtigung der ersten Dauer (D) übertragbar ist;
- Berechnen (704) eines ersten Werts (fsw2) der Wiederholfrequenz (fsw) im ersten Modus (MODE 1), wobei der erste Wert (fsw2) der Wiederholfrequenz durch die dritte übertragbare Leistung (Plim) und die erste Dauer (D) bestimmt wird; und
- Berechnen (704) eines zweiten Werts (fsw1) der Wiederholfrequenz (fsw) im zweiten Modus (MODE 2), wobei der zweite Wert (fsw1) der Wiederholfrequenz durch die dritte übertragbare Leistung (Plim) und die erste Dauer bestimmt wird.

3. Das Verfahren nach Anspruch 2, wobei:
jeder Übergang von dem ersten Modus (MODE 1) zu dem zweiten Modus (MODE 2) einen Sprung von dem ersten Wert (fsw2) zu dem zweiten Wert (fsw1) der Wiederholfrequenz (fsw) aufweist; und
jeder Übergang von dem zweiten Modus (MODE 2) zu dem ersten Modus (MODE 1) einen Sprung von dem zweiten Wert (fsw1) zu dem ersten Wert (fsw2) der Wiederholfrequenz (fsw) aufweist.

4. Das Verfahren nach Anspruch 2 oder 3, wobei:
jeder Übergang von dem ersten Modus (MODE 1) mit dem Nennwert (fsw0) der Wiederholfrequenz (fsw) zu dem zweiten Modus (MODE 2) mit dem Nennwert (fsw0) der Wiederholfrequenz (fsw) nacheinander Folgendes aufweist:
- im ersten Modus (MODE 1) Übergehen von der ersten Leistung (Plim2) zu der dritten Leistung (Plim) durch Übergehen von dem Nennwert (fsw0) der Wiederholfrequenz (fsw) zu dem ersten Wert (fsw2) der Wiederholfrequenz (fsw),
- bei der dritten Leistung (Plim) Umschalten von dem ersten Modus (MODE 1) zu dem zweiten Modus (MODE 2) durch Umschalten von dem ersten Wert (fsw2) der Wiederholfrequenz (fsw) zu dem zweiten Wert (fsw1) der Wiederholfrequenz, und
- im zweiten Modus (MODE 2) Übergehen von der dritten Leistung (Plim) zu der zweiten Leistung (Plim1) durch Übergehen von dem zweiten Wert (fsw1) der Wiederholfrequenz (fsw) zu dem Nennwert (fsw0) der Wiederholfrequenz (fsw); und
jeder Übergang von dem zweiten Modus (MODE 2) mit dem Nennwert (fsw0) der Wiederholfrequenz (fsw) zu dem ersten Modus (MODE 1) mit dem Nennwert (fsw0) der Wiederholfrequenz (fsw) nacheinander Folgendes aufweist:
- im zweiten Modus (MODE 2) Übergehen von der zweiten Leistung (Plim1) zu der dritten Leistung (Plim) durch Übergehen von dem Nennwert (fsw0) der Wiederholfrequenz zu dem zweiten Wert (fsw1) der Wiederholfrequenz,
- bei der dritten Leistung (Plim) Umschalten von dem zweiten Modus (MODE 2) zu dem ersten Modus (MODE 1) durch Umschalten von dem zweiten Wert (fsw1) der Wiederholfrequenz (fsw) zu dem ersten Wert (fsw2) der Wiederholfrequenz (fsw), und
- im ersten Modus (MODE 1) Übergehen von der dritten Leistung (Plim) zu der ersten Leistung (Plim2) durch Übergehen von dem ersten Wert (fsw2) der Wiederholfrequenz zu dem Nennwert (fsw0) der Wiederholfrequenz (fsw).

5. Das Verfahren nach einem der Ansprüche 2 bis 4, wobei:
die Schaltvorgänge zwischen den Zuständen jeder der ersten und der zweiten Sequenz zu Zeitpunkten (tA1, tA2, tB1, tB2, tB3, tB4) erfolgen, die aus Berechnungen resultieren, die auf einer Gleichheit zwischen Folgendem beruhen:
- einer Soll-Leistung, die zwischen den Brücken (110, 120) durch den Wandler (100) übertragen werden soll; und
- einer übertragbaren Leistung (P), die auf Grundlage des Modells des Wandlers und auf Grundlage von Werten der Spannungen (V1, V2) über den Brücken (110, 120) berechnet wird.

6. Das Verfahren nach Anspruch 5, wobei der Sollwert als Funktion eines Spannungswerts berechnet wird, der durch eine der Brücken (110) empfangen wird, und/oder eines Spannungswerts, der durch die andere der Brücken (120) geliefert werden soll.

7. Das Verfahren nach Anspruch 6, wobei der Sollwert so berechnet wird, dass der Wandler einen Betrieb vom PFC-Typ aufweist.

8. Das Verfahren nach einem der Ansprüche 5 bis 7, wobei die genannten Berechnungen ferner auf einer gewünschten Gleichheit zwischen Werten (i0) eines Stroms (I135) in dem Transformator (130) zu einem der Schaltzeitpunkte einer der zwei Sequenzen und zu einem der Schaltzeitpunkte der anderen der zwei Sequenzen beruhen.

9. Das Verfahren nach einem der Ansprüche 5 bis 8, wobei:
das Modell einen ersten Parameter (x) aufweist, der repräsentativ für eine zweite Dauer zwischen Schaltzeitpunkten der zwei Sequenzen (SA, SB) im ersten Modus (MODE 1) und für eine dritte Dauer zwischen Schaltzeitpunkten der zwei Sequenzen (SA, SB) im zweiten Modus (MODE 2) ist;
die erste übertragbare Leistung (Plim2) im ersten Modus (MODE 1) auf Grundlage des Modells unter Verwendung eines ersten Werts des ersten Parameters (x) berechnet wird, der einer Gleichheit der ersten und der zweiten Dauer entspricht;
die dritte übertragbare Leistung (Plim) im ersten und im zweiten Modus (MODE 1, MODE 2) auf Grundlage des Modells unter Verwendung eines Nullwerts des ersten Parameters berechnet wird; und
die zweite übertragbare Leistung (Plim1) im zweiten Modus (MODE 2) auf Grundlage des Modells unter Verwendung des ersten Werts des ersten Parameters (x) berechnet wird, der einer Gleichheit der ersten und der dritten Dauer entspricht.

10. Das Verfahren nach Anspruch 9, wobei:
im ersten Modus (MODE 1) das Modell durch die folgende Gleichung bestimmt wird: [Math 21] $P = \frac{V {1}^{2}}{4 . m . fsw . L} \left(\left(-4-4.{m}^{2}\right).{x}^{2}+\left(4.{m}^{2}-2.m+2\right).x+m-{m}^{2}\right)$
wobei P die übertragbare Leistung ist, V1 eine Spannung über einer der zwei Brücken ist, x der erste Parameter ist, fsw die Wiederholfrequenz ist, L ein Wert einer Streuinduktivität des Wandlers ist und m ein Verhältnis eines Verhältnisses der Spannungen über den zwei Brücken zu einem Übersetzungsverhältnis des Transformators ist; und
im zweiten Modus (MODE 2) das Modell durch die folgende Gleichung bestimmt wird: [Math 22] $P = \frac{V {1}^{2}}{4 . fsw . L} \left(1-2.x\right) \left(1-m.\left(1-2.x\right)-4.x\right) .$

11. Eine Einrichtung (180), die eingerichtet zum Implementieren eines Verfahrens nach einem der Ansprüche 1 bis 10 ist.

12. Ein Wandler (100), der eine Einrichtung nach Anspruch 11 aufweist.

## Claims

1. Method of controlling a converter (100) comprising two H bridges (110, 120) coupled by a transformer (130), each of the two bridges comprising two branches in parallel between two terminals of the bridge, each branch comprising two switches in series, wherein:
- repetitions, at a repetition frequency (fsw), of two sequences (SA, SB) of switching operations between a plurality of states (P, O, N) are respectively applied to the two bridges;
- a first (SB) of the two sequences is applied to a first of the two bridges, and said plurality of states of the first sequence comprises a first state (N) in which two switches of the first bridge disposed on one side of a first of the two terminals of the first bridge are respectively ON and OFF, a second state (P) in which said two switches of the first bridge are respectively OFF and ON, and a third state (O) in which two switches of the first bridge disposed on one side of a same terminal among the two terminal of the first bridge are OFF and the other two switches of the first bridge are ON;
- a second sequence (SA) of the two sequences is applied to a second of the two bridges, and said plurality of states of the second sequence comprises a first state (N) in which two switches of the second bridge disposed on one side of a first of the two terminals of the second bridge are respectively ON and OFF, and a second state (P) in which said two switches of the second bridge are respectively OFF and ON;
- a voltage is applied to the transformer by the first bridge in a given direction at the first state (N) of the first sequence (SB), and in an opposite direction to the given direction at the second state (P) of the first sequence (SB);
- in a first control mode (MODE 1), switching operations to enter and leave a given state of the first sequence (SB) among the first and second states of the first sequence (SB) occur in different states of the second sequence (SA);
- in a second control mode (MODE 2), switching operations to enter and leave a given state of the first sequence (SB) among the first and second states of the first sequence (SB) occur in a same state of the second sequence (SA); and the method being **characterized in that**:
- each transition between the first mode (MODE 1) at a nominal value (fsw0) of the repetition frequency (fsw) and the second mode (MODE 2) at the nominal value (fsw0) of the repetition frequency (fsw) comprises an adaptation of the repetition frequency (fsw) determined by a first duration (D) equal to a switching dead time duration or to the product of the switching dead time duration and of a zero-voltage switching margin.

2. Method according to claim 1, wherein each transition comprises, based on a model of the converter (100):
- the calculation (700) of a first power (Plim2) transferable between the two bridges (110, 120) with the first mode (MODE 1) and the nominal value (fsw0) of the repetition frequency (fsw), the first power (Plim2) being determined by the first duration (D);
- the calculation (700) of a second power (Plim1) transferable between the two bridges (110, 120) with the second mode (MODE 2) and the nominal value of the repetition frequency (fsw), the second power (Plim1) being determined by the first duration (D);
- the calculation (702) of a third power (Plim) transferable between the two bridges (110, 120) in the first and second modes (MODE 1, MODE 2) at the nominal value (fsw0) of the repetition frequency (fsw) and without taking into account the first duration (D);
- the calculation (704) of a first value (fsw2) of the repetition frequency (fsw) in the first mode (MODE 1), the first value (fsw2) of the repetition frequency being determined by the third transferable power (Plim) and the first duration (D); and
- the calculation (704) of a second value (fsw1) of the repetition frequency (fsw) in the second mode (MODE 2), the second value (fsw1) of the repetition frequency being determined by the third transferable power (Plim) and the first duration.

3. Method according to claim 2, wherein:
each transition from the first mode (MODE 1) to the second mode (MODE 2) comprises a jump from the first value (fsw2) to the second value (fsw1) of the repetition frequency (fsw); and
each transition from the second mode (MODE 2) to the first mode (MODE 1) comprises a jump from the second value (fsw1) to the first value (fsw2) of the repetition frequency (fsw).

4. Method according to claim 2 or 3, wherein:
each transition from the first mode (MODE 1) with the nominal value (fsw0) of the repetition frequency (fsw) to the second mode (MODE 2) with the nominal value (fsw0) of the repetition frequency (fsw) successively comprises:
- in the first mode (MODE 1), transiting from the first power (Plim2) to the third power (Plim) by transiting from the nominal value (fsw0) of the repetition frequency (fsw) to the first value (fsw2) of the repetition frequency (fsw),
- at the third power (Plim), switching from the first mode (MODE 1) to the second mode (MODE 2) by switching from the first value (fsw2) of the repetition frequency (fsw) to the second value (fsw1) of the repetition frequency, and
- in the second mode (MODE 2), transiting from the third power (Plim) to the second power (Plim1) by transiting from the second value (fsw1) of the repetition frequency (fsw) to the nominal value (fsw0) of the repetition frequency (fsw); and
each transition from the second mode (MODE 2) with the nominal value (fsw0) of the repetition frequency (fsw) to the first mode (MODE 1) with the nominal value (fsw0) of the repetition frequency (fsw) successively comprises:
- in the second mode (MODE 2), transiting from the second power (Plim1) to the third power (Plim) by transiting from the nominal value (fsw0) of the repetition frequency to the second value (fsw1) of the repetition frequency,
- at the third power (Plim), switching from the second mode (MODE 2) to the first mode (MODE 1) by switching from the second value (fsw1) of the repetition frequency (fsw) to the first value (fsw2) of the repetition frequency (fsw), and
- in the first mode (MODE 1), transiting from the third power (Plim) to the first power (Plim2) by transiting from the first value (fsw2) of the repetition frequency to the nominal value (fsw0) of the repetition frequency (fsw).

5. Method according to any of claims 2 to 4, wherein:
the switching operations between the states of each of the first and second sequences occur at times (tA1, tA2, tB1, tB2, tB3, tB4) resulting from calculations based on an equality between:
- a set point power to be transferred between the bridges (110, 120) by the converter (100); and
- a transferable power (P) calculated based on the converter model and based on values of the voltages (V1, V2) across the bridges (110, 120).

6. Method according to claim 5, wherein the set point is calculated as a function of a voltage value received by one of the bridges (110) and/or of a voltage value to be delivered by the other of the bridges (120).

7. Method according to claim 6, wherein the set point is calculated so that the converter has a PFC-type operation.

8. Method according to any of claims 5 to 7, wherein said calculations are further based on a desired equality between values (i0) of a current (I135) in the transformer (130) at one of the switching times of one of the two sequences and at one of the switching times of the other one of the two sequences.

9. Method according to any of claims 5 to 8, wherein:
the model comprises a first parameter (x) representative of a second duration between switching times of the two sequences (SA, SB) in the first mode (MODE 1) and of a third duration between switching times of the two sequences (SA, SB) in the second mode (MODE 2);
the first transferable power (Plim2) in the first mode (MODE 1) is calculated based on the model by using a first value of the first parameter (x) corresponding to an equality of the first and second durations;
the third transferable power (Plim) in the first and second modes (MODE 1, MODE 2) is calculated based on the model by using a zero value of the first parameter; and
the second transferable power (Plim1) in the second mode (MODE 2) is calculated based on the model by using the first value of the first parameter (x) corresponding to an equality of the first and third durations.

10. Method according to claim 9, wherein:
in the first mode (MODE 1), the model is determined by the following equation: [Math 21] $P = \frac{V {1}^{2}}{4 . m . fsw . L} \left(\left(-4-4.{m}^{2}\right).{x}^{2}+\left(4.{m}^{2}-2.m+2\right).x+m-{m}^{2}\right)$
where P is the transferable power, V1 is a voltage across one of the two bridges, x is the first parameter, fsw is the repetition frequency, L is a value of a leakage inductance of the converter, and m is a ratio of a ratio of the voltages across the two bridges to a transformation ratio of the transformer; and
in the second mode (MODE 2), the model is determined by the following equation: [Math 22] $P = \frac{V {1}^{2}}{4 . fsw . L} \left(1-2.x\right) \left(1-m.\left(1-2.x\right)-4.x\right) .$

11. Device (180) configured to implement a method according to any of claims 1 to 10.

12. Converter (100) comprising a device according to claim 11.
